# EUROPEAN PATENT APPLICATION

(11) **EP 4 818 078 A1**
(43) Date of publication of application: **07.10.2026**
(21) Application number: 25168653.1
(22) Date of filing: 04.04.2025
(51) Int. Cl.: B65G 1/04

(54) **ROBOTIC VEHICLE CONTROL**

(71) Applicant: AutoStore Technology AS, 5578 Nedre Vats (NO)
(72) Inventor: HÖRNLUND, Staffan, 5578 Nedre Vats (NO)
(74) Representative: Kilburn & Strode LLP

(57) **Abstract**

The disclosure relates to a controller configured to control the operation of one or more container-handling robotic vehicles (650, 660) at ports (711, 712, 713, 714, 715) in an automated storage and retrieval system (100) wherein the vehicles comprise a container lifting part (500) extending in the positive Y direction and the automated storage and retrieval system comprises ports arranged adjacent to each other and extending in the positive Y direction. The controller is configured to permit the container-handling vehicles to wait with the container lifting part over a first port of the group of ports when not performing an action in retrieving or depositing a container from/into the first port of the group of ports, before performing a subsequent action in retrieving or depositing a container from/into the first port of the group of ports; and control the container-handling vehicles to be prevented from waiting with the container lifting part over non-first ports of the group of ports when not performing an action in retrieving or depositing a container from/into the non-first ports of the group of ports.

## Description

### TECHNICAL FIELD

The disclosure relates to the control of robotic vehicles. More particularly, it relates to the control of container-handling robotic vehicles at ports in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

A control system can control movement of the container-handling robotic vehicles in the automated storage and retrieval system, for example routing the container-handling robotic vehicles to ports for retrieving and depositing containers.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a perspective view of a 'cantilever' type of container-handling robotic vehicle;
Fig. 6 shows a conceptual top-down view of an exemplary grid;
Fig. 7 shows a conceptual top-down view of an exemplary grid;
Fig. 8A shows a conceptual top-down view of a grid in the region around the first group of ports;
Fig. 8B shows another conceptual top-down view of a grid in the region around the first group of ports;
Fig. 9 shows a block diagram of a controller in combination with a first container-handling robotic vehicle and a second container handling robotic vehicle;
Figs. 10A - 10D are a flow chart of a process of controlling the container-handling robotic vehicles when retrieving or depositing containers at the first group of ports;
Fig. 11 is a conceptual top-down view of a grid in the region around the first group of ports with a first container-handling robotic vehicle at the first port;
Figs. 12A - 12D is a flow chart of a process of controlling the container-handling robotic vehicles when retrieving or depositing containers at the second group of ports; and
Fig. 13 is a conceptual top-down view of a grid in the region around the second group of ports with a second container-handling robotic vehicle at the first port.

### DETAILED DESCRIPTION

In overview, the disclosure relates to controlling vehicle operation at ports in an automated storage and retrieval system.

The automated storage and retrieval system can comprise a grid structure comprising a plurality of grid cells across which a plurality of container-handling robotic vehicles traverse in an X-Y plane, wherein the container-handling robotic vehicles are configured to move forward and backward in an X-direction and a Y-direction in the X-Y plane.

The container-handling robotic vehicles can each comprise a container lifting part and a main body part, wherein the container lifting part is configured to be positioned over a cell to retrieve or deposit a container from/into the cell, and when the container lifting part is arranged over a cell the main body part is positioned over an adjacent cell in the Y-direction such that the container-handling robotic vehicles each have a length of more than one grid cell in the Y-direction.

The plurality of container-handling robotic vehicles can comprise one or more first container-handling robotic vehicles arranged with the container lifting part extending from the main body part in the positive Y-direction on the grid, and one or more second container-handling robotic vehicles arranged with the container lifting part extending from the main body part in the negative Y-direction on the grid, wherein the negative Y-direction is opposite to the positive Y-direction.

A group of ports can be configured for the insertion and removal of containers into/from the grid structure. The group of ports comprises a plurality of ports each occupying different respective grid cells that are adjacent to one another and are arranged in a line that extends in the positive Y-direction from a first port of the group of ports to a last port of the group of ports.

The one or more first container-handling robotic vehicles can be permitted to wait with the container lifting part over the first port of the group of ports when not performing an action in retrieving or depositing a container from/into the first port of the group of ports, before performing a subsequent action in retrieving or depositing a container from/into the first port of the group of ports.

The one or more first container-handling robotic vehicles and the one or more second container-handling robotic vehicles are controlled to be prevented from waiting with the container lifting part over non-first ports of the group of ports when not performing an action in retrieving or depositing a container from/into the non-first ports of the group of ports.

In this way, a group of ports can be arranged to extend in a line in the same direction (i.e., the Y-direction) as the container lifting parts extend from the bodies of the container-handling robotic vehicles. This increases port throughput, compared to only having ports that are arranged extending in a line in a perpendicular direction (i.e., the X-direction) to that which the container lifting parts extend from the bodies of the container-handling robotic vehicles. Blocking of the ports is minimised by preventing the container-handling vehicles from waiting on the non-first ports. This further improves port throughput. Furthermore, blocking of the first port is avoided, thereby allowing operation of the first port as a high-throughput port at which a first container-handling robotic vehicle can wait to collect a container, so that the container can be collected as soon as an operator at the port has finished with the container and it is to be sent to the storage grid. Again, this improves port throughput, particularly during a goods-in procedure in which containers are being loaded into the storage grid.

### Automated storage and retrieval system overview

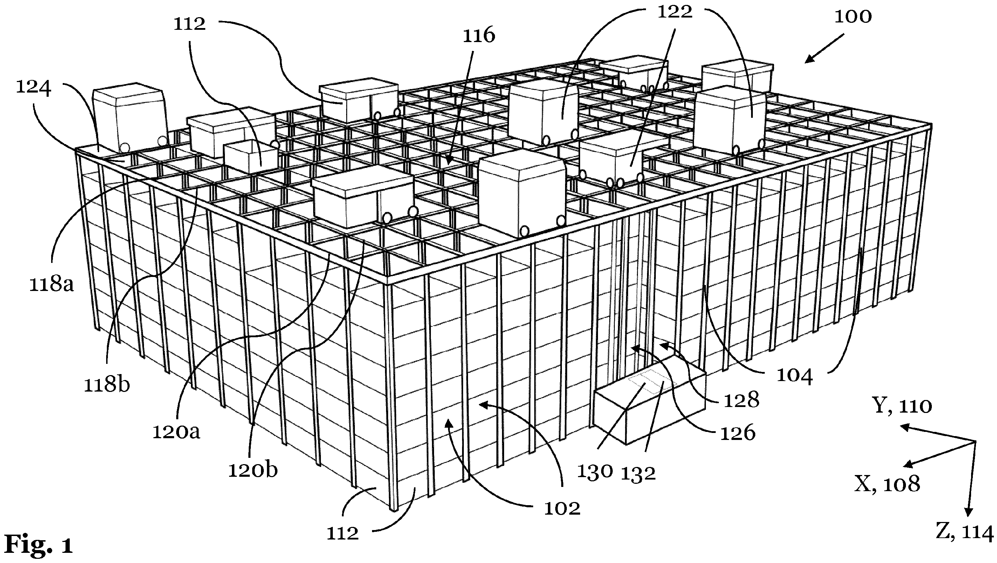

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles (interchangeably referred to as container-handling robotic vehicles), or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

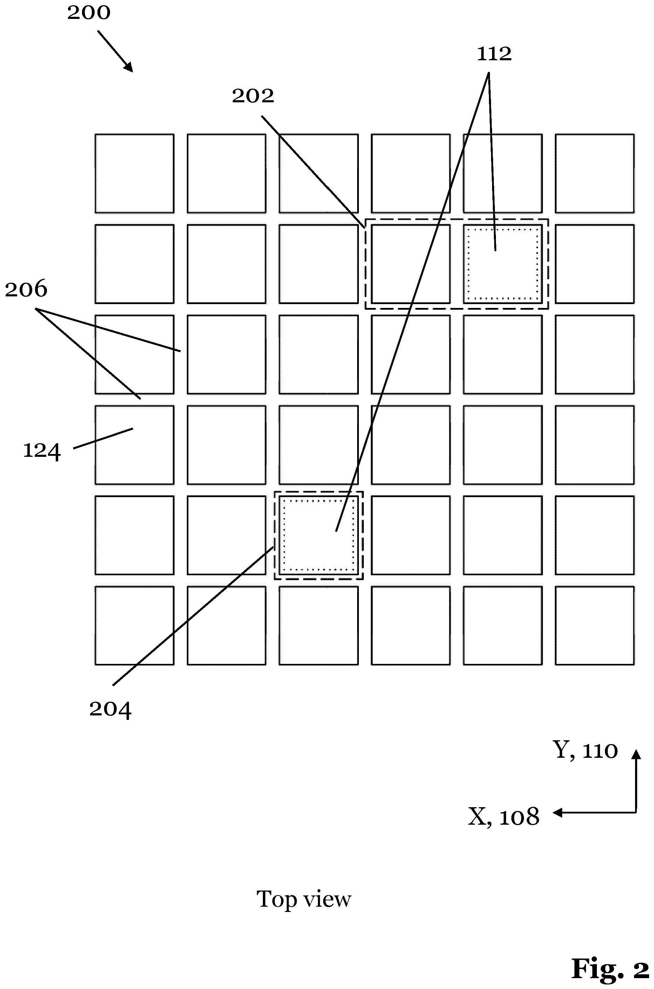

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

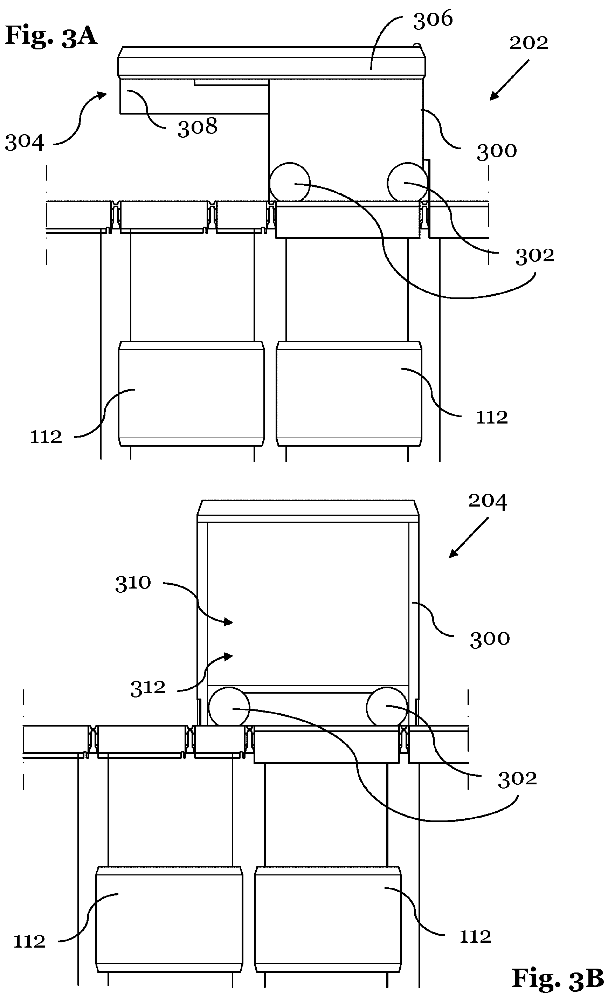

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

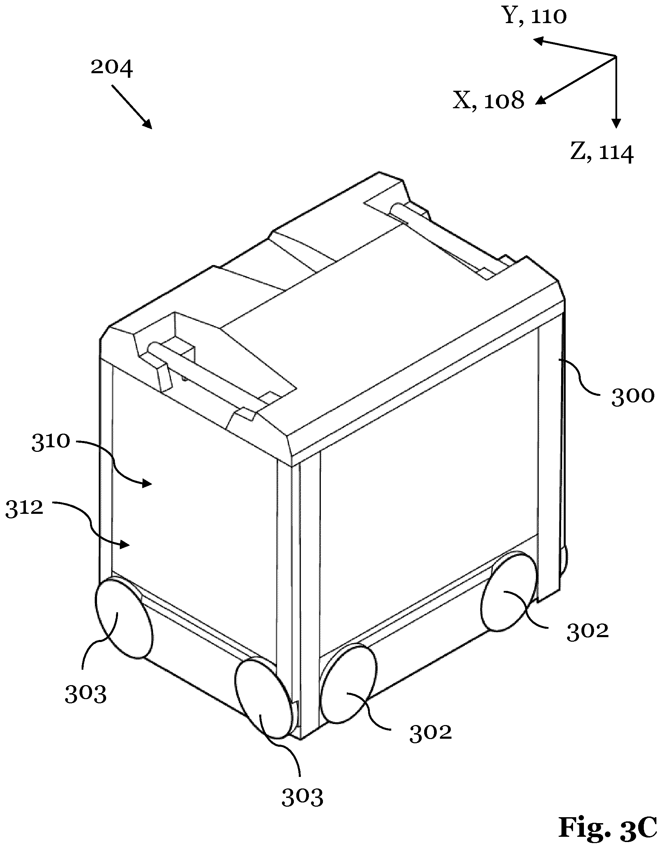

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

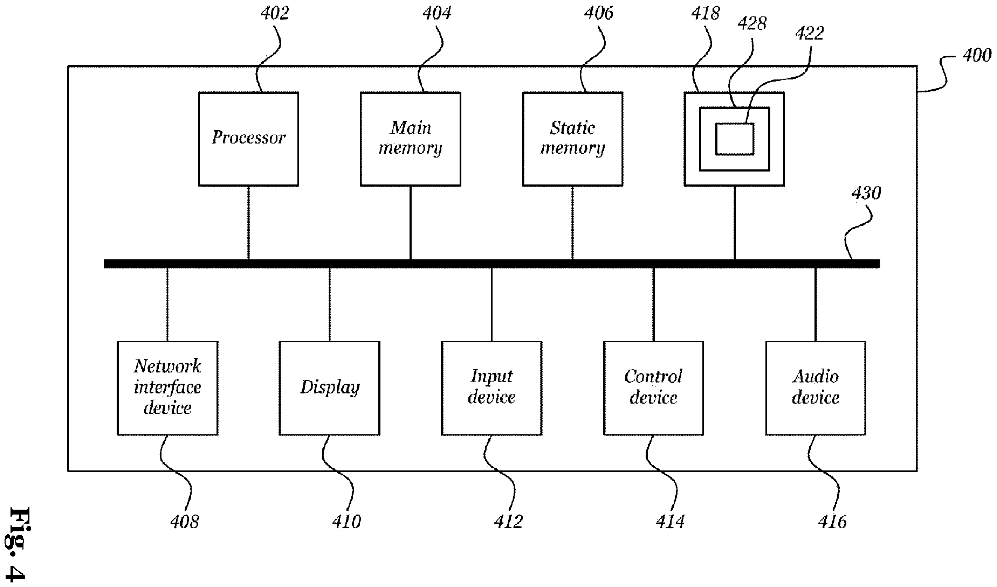

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Control of Robotic Vehicles at Ports

The present disclosure will now be described in general terms before implementations of the disclosure are described by way of example with reference to the drawings. The words "may" and "can" are used to refer to a feature that is optional, i.e. in some implementations of the disclosure, the feature is present, and in some implementations of the disclosure, the feature is not present.

There is provided a controller. The controller can be configured to control container-handling robotic vehicle operation at ports in an automated storage and retrieval system.

The automated storage and retrieval system can comprise a grid structure.

The grid structure can comprise a plurality of grid cells across which a plurality of container-handling robotic vehicles can traverse in an X-Y plane.

The container-handling robotic vehicles can be configured to move forward and backward in an X-direction and a Y-direction in the X-Y plane.

The container-handling robotic vehicles can each comprise a container lifting part and a main body part.

The container lifting part can be configured to be positioned over a cell to retrieve or deposit a container from/into the cell.

When the container lifting part is arranged over a cell the main body part can be positioned over an adjacent cell in the Y-direction such that the container-handling robotic vehicles each have a length of more than one grid cell in the Y-direction.

The plurality of container-handling robotic vehicles can comprise one or more first container-handling robotic vehicles arranged with the container lifting part extending from the main body part in the positive Y-direction on the grid.

The plurality of container-handling robotic vehicles can comprise one or more second container-handling robotic vehicles arranged with the container lifting part extending from the main body part in the negative Y-direction on the grid.

The negative Y-direction can be opposite to the positive Y-direction.

The automated storage and retrieval system can further comprise a group of ports.

The group of ports can be configured for the insertion and removal of containers into/from the grid structure.

The group of ports can comprise a plurality of ports each occupying different respective grid cells that are adjacent to one another and are arranged in a line that extends in the positive Y-direction from a first port of the group of ports to a last port of the group of ports.

The controller can be configured to permit the one or more first container-handling robotic vehicles to wait with the container lifting part over the first port of the group of ports when not performing an action in retrieving or depositing a container from/into the first port of the group of ports, before performing a subsequent action in retrieving or depositing a container from/into the first port of the group of ports.

The controller can be configured to control the one or more first container-handling robotic vehicles and the one or more second container-handling robotic vehicles to be prevented from waiting with the container lifting part over non-first ports of the group of ports when not performing an action in retrieving or depositing a container from/into the non-first ports of the group of ports.

The non-first ports can be ports in the group of ports that are not the first port

The action of depositing a container into a port can comprise lowering the container into the port with a lifting device, releasing the container, and raising the lifting device from the port after releasing the container.

The action of retrieving a container can comprise lowering a lifting device into the port, engaging the container, and raising the lifting device from the port with the container engaged to the lifting device.

The controller can be configured to control the one or more second container-handling robotic vehicles to be permitted to retrieve/deposit containers from/into the non-first ports of the group of ports, and/or to be prevented from retrieving/depositing containers from/into the first port of the group of ports.

The controller can be configured to control the one or more first containing-handling robotic vehicles to be permitted to retrieve/deposit containers from/into non-second ports of the group of ports, and to be prevented from retrieving/depositing containers from/into the second port of the group of ports.

The controller can be configured to control the one or more second container-handling robotic vehicles to be permitted to retrieve/deposit containers from/into the second port of the group of ports.

The second port of the group of ports can be immediately adjacent to the first port of the group of ports in a direction toward the last port of the group of ports.

The group of ports can be a first group of ports, and the automated storage and retrieval system further can further comprises a second group of ports, separate to the first group of ports, wherein the second group of ports comprises a plurality of ports each occupying different respective grid cells that are adjacent to one another and are arranged in a line that extends in the negative Y-direction from a first port of the second group of ports to a last port of the second group of ports.

The controller can be configured to permit the one or more second container-handling robotic vehicles to wait with the container lifting part over the first port of the second group of ports when not performing an action in retrieving or depositing a container from/into the first port of the second group of ports, before performing a subsequent action in retrieving or depositing a container from/into the first port of the second group of ports.

The controller can be configured to control the one or more first container-handling robotic vehicles and the one or more second container-handling robotic vehicles to be prevented from waiting with the container lifting part over non-first ports of the second group of ports when not performing an action in retrieving or depositing a container from/into the non-first ports of the second group of ports.

The controller can be configured to control the one or more first container-handling robotic vehicles to be permitted to retrieve/deposit containers from/into the non-first ports of the second group of ports, and to be prevented from retrieving/depositing containers from/into the first port of the second group of ports.

The controller can be configured to control the one or more second container-handling robotic vehicles to be permitted to retrieve/deposit containers from/into non-second ports of the second group of ports, and to be prevented from retrieving/depositing containers from/into the second port of the second group of ports, and control the one or more first container-handling robotic vehicles to be permitted to retrieve/deposit containers from/into the second port of the second group of ports.

The first group of ports can be arranged at a first edge of the grid and the second group of ports are arranged at a second edge of the grid.

The second edge of the grid can be an opposite edge to the first edge in the X-direction.

The automated storage and retrieval system can comprise a third group of ports.

The third group of ports can comprise a single port, or a plurality of ports that are adjacent to one another and are arranged in a line that extends in the X-direction from a first port of the third group of ports to a last port of the third group of ports.

The controller can be configured to control only the one or more first container-handling robotic vehicles to retrieve/deposit containers from/into ports of the third group of ports.

The third group of ports can be arranged at a third edge of the grid, wherein the third edge of the grid is an edge in the positive Y-direction.

The controller can be configured to permit the one or more first container-handling robotic vehicles to wait with the container lifting part over any one of the ports of the third group of ports when not performing an action in retrieving or depositing a container from/into the port of the third group of ports, before performing a subsequent action in retrieving or depositing a container from/into the port of the third group of ports.

The automated storage and retrieval system can comprise a fourth group of ports.

The fourth group of ports can comprise a single port, or a plurality of ports that are adjacent to one another and are arranged in a line that extends in the X-direction from a first port of the fourth group of ports to a last port of the fourth group of ports.

The controller can be configured to control only the one or more second container-handling robotic vehicles to retrieve/deposit containers from/into ports of the fourth group of ports.

The fourth group of ports can be arranged at a fourth edge of the grid, wherein the fourth edge of the grid is an edge in the negative Y-direction.

The controller can be configured to permit the one or more second container-handling robotic vehicles to wait with the container lifting part over any one of the ports of the fourth group of ports when not performing an action in retrieving or depositing a container from/into the port of the fourth group of ports, before performing a subsequent action in retrieving or depositing a container from/into the port of the fourth group of ports.

There is provided an automated storage and retrieval system comprising the aforementioned controller.

There is provided a method.

The method can be for controlling container-handling robotic vehicle operation at ports in an automated storage and retrieval system.

The automated storage and retrieval system can comprise a grid structure.

The grid structure can comprise a plurality of grid cells across which a plurality of container-handling robotic vehicles can traverse in an X-Y plane.

The container-handling robotic vehicles can be configured to move forward and backward in an X-direction and a Y-direction in the X-Y plane.

The container-handling robotic vehicles can each comprise a container lifting part and a main body part.

The container lifting part can be configured to be positioned over a cell to retrieve or deposit a container from/into the cell.

When the container lifting part is arranged over a cell the main body part can be positioned over an adjacent cell in the Y-direction such that the container-handling robotic vehicles each have a length of more than one grid cell in the Y-direction.

The plurality of container-handling robotic vehicles can comprise one or more first container-handling robotic vehicles arranged with the container lifting part extending from the main body part in the positive Y-direction on the grid.

The plurality of container-handling robotic vehicles can comprise one or more second container-handling robotic vehicles arranged with the container lifting part extending from the main body part in the negative Y-direction on the grid.

The negative Y-direction can be opposite to the positive Y-direction.

The automated storage and retrieval system can further comprise a group of ports.

The group of ports can be configured for the insertion and removal of containers into/from the grid structure.

The group of ports can comprise a plurality of ports each occupying different respective grid cells that are adjacent to one another and are arranged in a line that extends in the positive Y-direction from a first port of the group of ports to a last port of the group of ports.

The method can comprise permitting the one or more first container-handling robotic vehicles to wait with the container lifting part over the first port of the group of ports when not performing an action in retrieving or depositing a container from/into the first port of the group of ports, before performing a subsequent action in retrieving or depositing a container from/into the first port of the group of ports; and

The method can comprise controlling the one or more first container-handling robotic vehicles and the one or more second container-handling robotic vehicles to be prevented from waiting with the container lifting part over non-first ports of the group of ports when not performing an action in retrieving or depositing a container from/into the non-first ports of the group of ports.

The method can also comprise corresponding features to those described with reference to the aforementioned controller.

There is provided a computer-readable medium.

The computer-readable medium can store instructions thereon that when executed by one or more processors of a controller in an automated storage and retrieval system cause the controller to control container-handling robotic vehicle operation at ports in an automated storage and retrieval system.

The automated storage and retrieval system can comprise a grid structure.

The grid structure can comprise a plurality of grid cells across which a plurality of container-handling robotic vehicles can traverse in an X-Y plane.

The container-handling robotic vehicles can be configured to move forward and backward in an X-direction and a Y-direction in the X-Y plane.

The container-handling robotic vehicles can each comprise a container lifting part and a main body part.

The container lifting part can be configured to be positioned over a cell to retrieve or deposit a container from/into the cell.

When the container lifting part is arranged over a cell the main body part can be positioned over an adjacent cell in the Y-direction such that the container-handling robotic vehicles each have a length of more than one grid cell in the Y-direction.

The plurality of container-handling robotic vehicles can comprise one or more first container-handling robotic vehicles arranged with the container lifting part extending from the main body part in the positive Y-direction on the grid.

The plurality of container-handling robotic vehicles can comprise one or more second container-handling robotic vehicles arranged with the container lifting part extending from the main body part in the negative Y-direction on the grid.

The negative Y-direction can be opposite to the positive Y-direction.

The automated storage and retrieval system can further comprise a group of ports.

The group of ports can be configured for the insertion and removal of containers into/from the grid structure.

The group of ports can comprise a plurality of ports each occupying different respective grid cells that are adjacent to one another and are arranged in a line that extends in the positive Y-direction from a first port of the group of ports to a last port of the group of ports.

The instructions can cause the one or more processors to permit the one or more first container-handling robotic vehicles to wait with the container lifting part over the first port of the group of ports when not performing an action in retrieving or depositing a container from/into the first port of the group of ports, before performing a subsequent action in retrieving or depositing a container from/into the first port of the group of ports; and

The instructions can cause the one or more processors to control the one or more first container-handling robotic vehicles and the one or more second container-handling robotic vehicles to be prevented from waiting with the container lifting part over non-first ports of the group of ports when not performing an action in retrieving or depositing a container from/into the non-first ports of the group of ports.

The computer-readable medium can also comprise corresponding features to those described with reference to the aforementioned controller.

The computer-readable medium can be a non-transitory computer-readable medium.

Each possible combination of any of the above-described features forms part of the present disclosure. A plurality of instances of any feature may also be present.

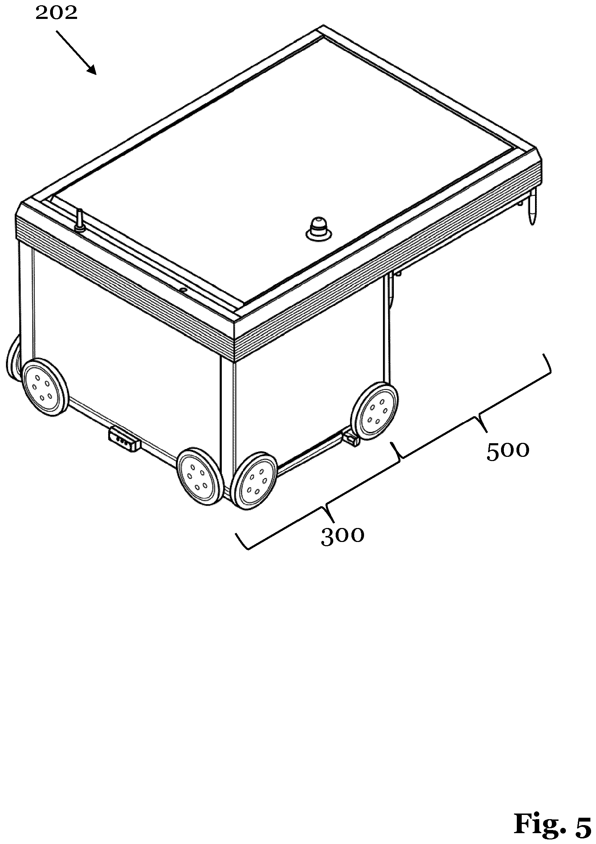

By way of example, implementations of the disclosure will now be described with reference to Figs. 5 to 13. Each possible combination of any features described below with any features described above also forms part of the disclosure.

The 'cantilever' type of container-handling robotic vehicle 202 occupies more than one cell on the grid (as depicted in Fig. 3A). Such container-handling robotic vehicles can be considered to have a main body 300 and a container lifting part 500, as depicted in the perspective view of the 'cantilever' type of container-handling robotic vehicle 202 in Fig. 5. The container lifting part 500 comprises the lifting device 304

When the main body 300 is positioned over one cell on the grid, the container lifting part 500 is positioned over an adjacent cell.

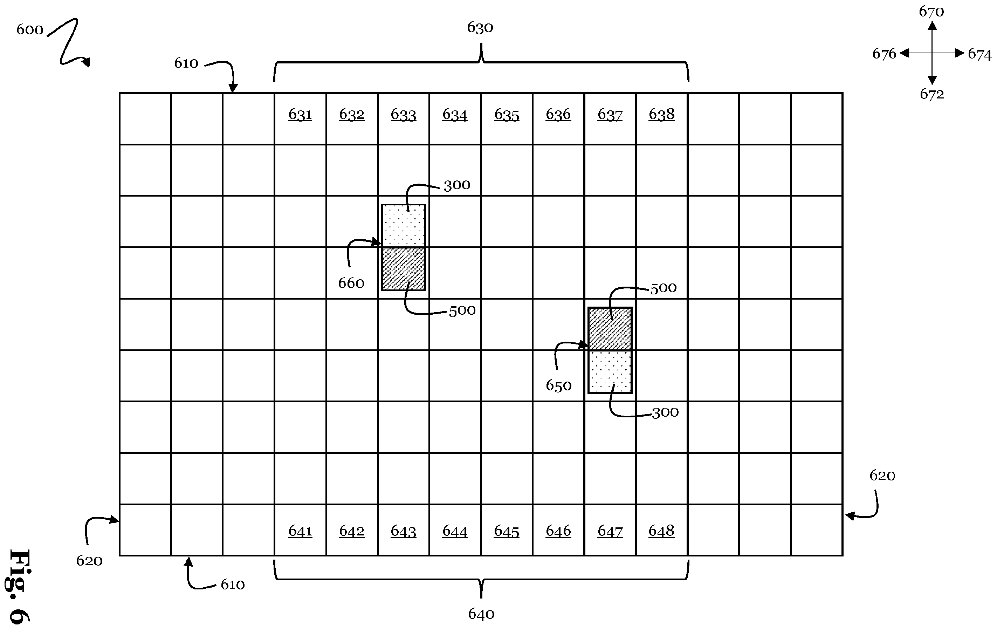

Fig. 6 shows a conceptual top-down view of an exemplary grid 600.

From the top-down perspective, the grid is rectangular and has two longer sides 610 connected by two shorter sides 620. This is only for exemplary purposes, however, and it is to be understood that the grid could have any length of edges (e.g., as a square) and/or any number of edges (e.g., as an I-shape, L-shape etc).

Container-handling robotic vehicles 650, 660 move across the grid in the positive Y-direction 670, the negative Y-direction 672, the positive X-direction 674 and the negative X-direction 676.

Ports 631-638, 641-648 are arranged at the edges of the grid 600, at which container-handling robotic vehicles 650, 660 deposit and retrieve containers for removal from / insertion into the grid 600.

Typically, for systems using the cantilever type container handling robotic vehicles 202, the ports are arranged on the longer edges 610 of the grid 600. The cantilever type container handling robotic vehicles 202 are then orientated to have the container lifting part 500 extending from the body 300 in a direction toward the ports so that containers can be raised and lowered from/into the ports.

Hereinafter, reference to "ports" in the grid 600 (and subsequently 700) refers to the opening in the cell above the port column, into/from which the container is lowered/raised, as discussed with reference to Fig. 1.

In the example of Fig. 6, a group of ports 630 are arranged along the longer edge 610, in the positive Y-direction 670, of the grid 600. This group of ports 630 includes eight ports (labelled 631 - 638) in this example; however, this is not limited to eight ports and could include any integer number of ports from 1 to n, depending on the size of the grid 600. Another group of ports 640 are arranged along the opposite longer edge 610, in the negative Y-direction 672, of the grid 600. This group of ports 640 also includes eight ports (labelled 641 - 648); however, this is not limited to eight ports and could include any integer number of ports from 1 to n, depending on the size of the grid. In other examples, ports may only be arranged on one edge of the grid 600.

In the example of Fig. 6, the robotic vehicles can have one of two orientations. In the first orientation, first container-handling robotic vehicles 650 have the container lifting part 500 extending from the body 300 in the positive Y-direction 670. In the second orientation, second container-handling robotic vehicles 660 have the container lifting part 500 extending from the body 300 in the negative Y-direction 672.

While only one first container-handling robotic vehicle 650 is shown, it would be readily understood that a plurality of first container-handling robotic vehicles 650 (i.e., a plurality of container-handling vehicles with the container lifting part 500 extending from the body 300 in the positive Y-direction 670) can be included on the grid 600. While only one second container-handling robotic vehicle 660 is shown, it would be readily understood that a plurality of second container-handling robotic vehicles 660 (i.e., a plurality of container-handling vehicles with the container lifting part 500 extending from the body 300 in the negative Y-direction 670) can be included on the grid 600.

The first container-handling robotic vehicles 650 serve the group of ports 630 arranged along the longer edge 610, in the positive Y-direction 670.

The second container-handling robotic vehicles 660 serve the group of ports arranged along the opposite longer edge 610, in the negative Y-direction 672, of the grid 600.

Arranging the ports on the longer edges allows for more ports, and therefore more storage and retrieval throughput, than arranging the ports on the shorter edges of the grid.

Arranging the ports on the edges such that the ports extend in a line in a direction (positive/negative X-direction 674, 676) perpendicular to the direction (positive/negative Y-direction 670, 672) from which the container lifting part extends 500 from the body 300 of the container-handling robotic vehicles 650, 660 means that when the container-handling robotic vehicles 650, 660 are serving any of the ports 631-638, 641-648, they do not block access to adjacent ports.

Storage and retrieval throughput could be further increased by adding additional ports on the other edges of the grid (i.e., the edge in the positive X-direction 674, and/or the edge in the negative X-direction 676). These are the shorter edges, in the example of Fig. 6. These edges 620 are perpendicular to the edges 610.

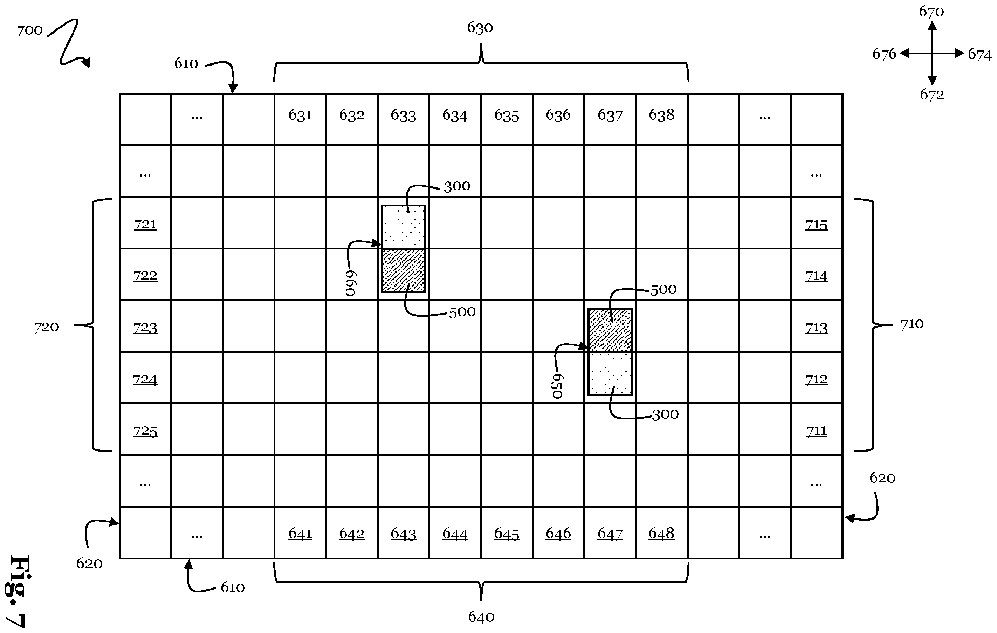

Fig. 7 shows a conceptual top-down view of an exemplary grid 700. The grid 700 of Fig. 7 is a modified view of the grid 600 of Fig. 6, and common reference numerals denote common features, the detail of which are not repeated here for brevity.

Although the grid 700 is shown as being rectangular, this is only for exemplary purposes. It is to be understood that the grid could have any length of edges (e.g., as a square) and/or any number of edges (e.g., as an I-shape, L-shape etc).

In the grid 700, ports on the edges 620, that are perpendicular to the edges 610, have been added.

In other words, there are groups of ports 710, 720 that occupy grid cells that are arranged in a line that extends in the positive/negative Y-direction 670, 672.

The first container-handling robotic vehicles 650 are arranged with the container lifting part extending 500 from the main body part 300 in the positive Y-direction. 670 The second container-handling robotic vehicles 660 arranged with the container lifting part 500 extending from the main body part 300 in the negative Y-direction 672.

That is, these groups of ports 710, 720 on the shorter edges 620 of the grid 700 (in the case of Fig. 7) extend in a line in the same direction (the positive/negative Y-direction 670, 672) as that from which the containing lifting part 500 extends from the body 300 of the container-handling robotic vehicles 650, 660. On the other hand, the groups of ports 630, 640 on the longer edges of the grid 700 (in the case of Fig. 7) extend in a line in a direction (the positive/negative X-direction 674, 676) that is perpendicular to the direction (the positive/negative Y-direction 670, 672) from which the containing lifting part 500 extends from the body 300 of the container-handling robotic vehicles 650, 660.

The group of ports 710 are considered a first group of ports 710. The first group of ports 710 comprises a plurality of ports 711-715 each occupying different respective grid cells that are adjacent to one another and are arranged in a line that extends in the positive Y-direction 670 from a first port 711 of the group to a last port 715 of the group. This line of ports extends in the same direction (the positive/negative Y-direction 670, 672) as the container lifting part 500 extends from the body 300 of the container-handling robotic vehicles 650, 660. While five ports are shown in the first group 710, it will be understood that this is only for exemplary purposes and that any suitable number of ports can be used.

The group of ports 720 are considered a second group of ports 720. The second group of ports 720 comprises a plurality of ports 721-725 each occupying different respective grid cells that are adjacent to one another and are arranged in a line that extends in the negative Y-direction 672 from a first port 721 of the group to a last port 725 of the group. This line of ports extends in the same direction (the positive/negative Y-direction 670, 672) as the container lifting part 500 extends from the body 300 of the container-handling robotic vehicles 650, 660. While five ports are shown in the second group 720, it will be understood that this is only for exemplary purposes and that any suitable number of ports can be used.

The first group of ports 710 are arranged at a first edge of the grid 700 in the positive X-direction 674. The second group of ports 720 are arranged at a second edge of the grid 700 in the negative X-direction 676. The second edge of the grid 700 is an opposite edge to the first edge in the positive/negative X-direction 674, 676. The first edge and the second edge are the shorter sides 620 of the grid 700.

The group of ports 630 are considered a third group of ports 630. The third group of ports 630 comprises a plurality of ports 631-638 each occupying different respective grid cells that are adjacent to one another and are arranged in a line that extends in the positive X-direction 674 from a first port 631 of the group to a last port 638 of the group. This line of ports extends in a perpendicular direction (the positive/negative X-direction 674, 676) to the direction (the positive/negative Y-direction 670, 672) that the container lifting part 500 extends from the body 300 of the container-handling robotic vehicles 650, 660. While eight ports are shown in the third group 630, it will be understood that this is only for exemplary purposes and that any suitable number of ports can be used.

The group of ports 640 are considered a fourth group of ports 640. The fourth group of ports 640 comprises a plurality of ports 641-648 each occupying different respective grid cells that are adjacent to one another and are arranged in a line that extends in the negative X-direction 676 from a first port 641 of the group to a last port 648 of the group. This line of ports extends in a perpendicular direction (the positive/negative X-direction 674, 676) to the direction (the positive/negative Y-direction 670, 672) that the container lifting part 500 extends from the body 300 of the container-handling robotic vehicles 650, 660. While eight ports are shown in the fourth group 640, it will be understood that this is only for exemplary purposes and that any suitable number of ports can be used.

The third group of ports 630 are arranged at a third edge of the grid in the positive Y-direction 670. The fourth group of ports 640 are arranged at a fourth edge of the grid in the negative Y-direction 672. The fourth edge of the grid is an opposite edge to the third edge of the grid in the Y-direction. The third edge and the fourth edge are the longer sides 610 of the grid 700.

The first container-handling robotic vehicles 650 serve the first group of ports 710, the second group of ports 720, an the third group of ports 630. The first container-handling robotic vehicles 650 do not serve the fourth group of ports 640 because the orientation of the container-lifting part 500 extending in the positive Y-direction 670 from the body 300 does not allow this, due to the edge of the grid 700. However, in other examples in which the grid extends beyond the fourth group of ports 640 in the negative Y-direction 672, the first container-handling robotic vehicles 650 could serve such ports.

The second container-handling robotic vehicles 660 serve the first group of ports 710, the second group of ports 720, an the fourth group of ports 640. The second container-handling robotic vehicles 660 do not serve the third group of ports 630 because the orientation of the container-lifting part 500 extending in the positive Y-direction 670 from the body 300 does not allow this, due to the edge of the grid 700. However, in other examples in which the grid extends beyond the third group of ports 630 in the positive Y-direction 670, the second container-handling robotic vehicles 660 could serve such ports.

As the ports in the first group of ports 710 and the second group of ports 720 extend in the same direction (positive/negative Y-direction 670, 672) as the direction the container lifting part 500 extends from the body of the container-handling robotic vehicle 650, 660, issues are faced in that when a first container-handling robotic vehicle 650 is serving a port, with the container-lifting part 500 over the port, the main body 300 can obstruct access for another container-handling robotic vehicle to the adjacent port in the negative Y-direction 672.

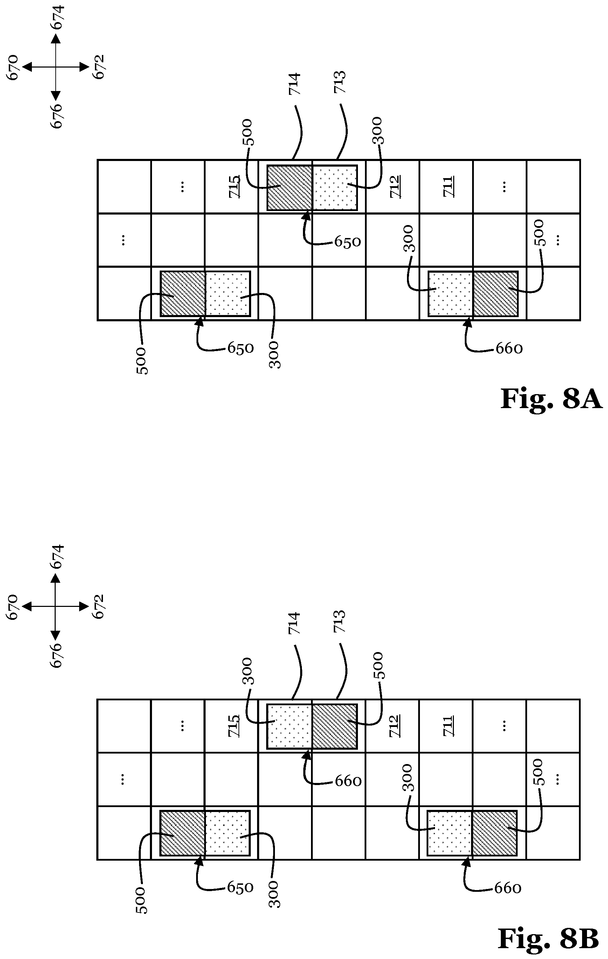

This is depicted in Fig. 8A, which shows a top-down view of the grid 700 in the region around the first group of ports 700, with two of the first container-handling robotic vehicles 650 and one second container-handling robotic vehicle 660. One of the first container-handling robotic vehicles 650 is performing an action in depositing or retrieving a container from the fourth port 714. The container lifting part 500 is arranged over the fourth port 714, and the body 300 is arranged over the third port 713. Consequently the other first container-handling robotic vehicle 650 cannot access the third port 713 to perform an action in depositing or retrieving a container, or the fifth port 715 to perform an action in depositing or retrieving a container because it would need the fourth port 714 to be clear for its body 300 so that its container lifting part 500 can be positioned over the fifth port 715.

Likewise, the second container-handling robotic vehicle 660 cannot access the second port 712 to perform an action in depositing or retrieving a container because it would need the third port 713 to be clear for its body 300 so that its container lifting part 500 can be positioned over the second port 712. The second container-handling robotic vehicle 660 also cannot access the third port to perform actions in depositing or retrieving a container.

That is, the first container-handling robotic vehicle 650 with the container lifting part 500 over the fourth port 714 is blocking the other first container-handling robotic vehicle 650 from accessing the third port 716, the fourth port 714 and the fifth port 715 for performing actions in storing or retrieving a container. At the same time, the first container-handling robotic vehicle 650 with the container lifting part 500 over the fourth port 714 is blocking the second container-handling robotic vehicle 660 from accessing the second port 712, the third port 713 and the fourth port 714.

Similarly, when a second container-handling robotic vehicle 660 is serving a port, with the container-lifting part 500 over the port, the main body 300 can obstruct access for another container-handling robotic vehicle to the adjacent port in the positive Y-direction 670. This can impact storage and retrieval efficiency at such ports.

This is depicted in Fig. 8B. Fig. 8B shows another top-down view of the grid 700 in the region around the first group of ports 700, with one of the first container-handling robotic vehicles 650 and two of the second container-handling robotic vehicles 660. One of the second container-handling robotic vehicles 660 is performing an action in depositing or retrieving a container from the third port 713. This is obstructing the other second container-handling robotic vehicle 660 from accessing the second port 712, the third port 713 and the fourth port 714 to perform actions in depositing or retrieving a container. At the same time, the first container handling robotic vehicle 650 is being obstructed from performing actions in depositing or retrieving a container in the third port 713, the fourth port 714 and the fifth port 715.

The first container-handling robotic vehicles 650 and the second container-handling robotic vehicles 660 are controlled, by a controller, as they traverse the grid and perform storage and retrieval actions.

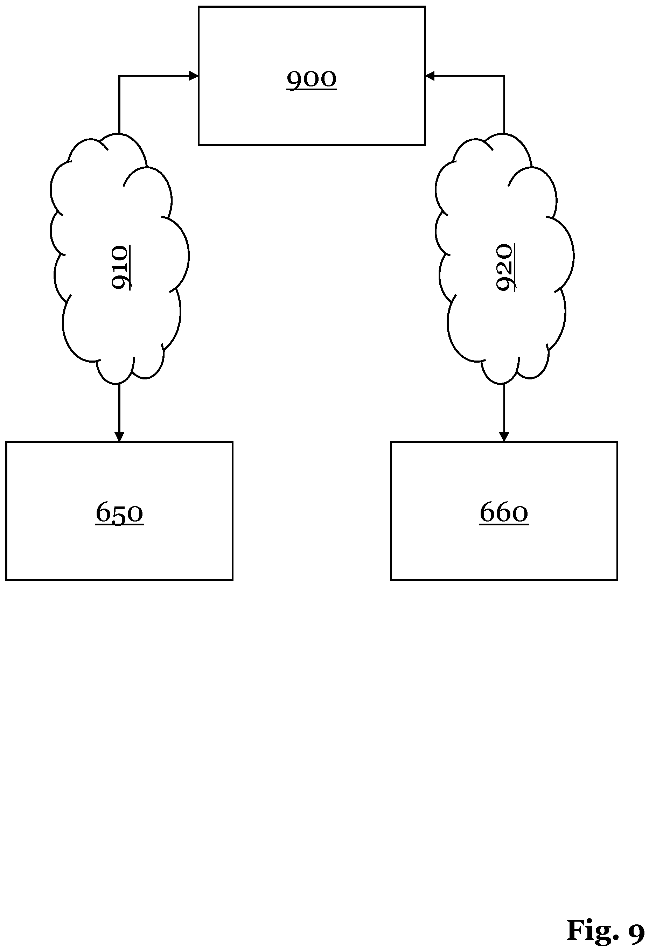

Turning briefly to Fig. 9, a block diagram of the controller 900 in combination with the first container-handling robotic vehicle 650 and the second container handling robotic vehicle 660 is shown. While one first container-handling robotic vehicle 650 and one second container-handling vehicle 660 are shown, it will be readily understood that the teaching applies to systems with one or more than one first container-handling robotic vehicles 650 and one or more than one second container-handling vehicles 660.

In an example, the controller 900 can be implemented as described with reference to the processing system 400 of Fig. 4, and for brevity this detail is not repeated here.

A first communication channel 910 exists between the controller 900 and the first container-handling robotic vehicle 650. A second communication channel 920 exists between the controller 900 and the second container-handling robotic vehicle 660. While Fig. 9 shows one first container-handling robotic vehicle 650 and one second container-handling robotic vehicle, with communication channels therebetween, it will be readily understood that there can be a plurality of first container-handling robotic vehicles 650 and a plurality of second container-handling robotic vehicles 660, each with their own respective communication channels to the controller 900.

The controller 900 controls the container handling-robotic vehicles 650, 660 by sending instructions to the container-handling robotic vehicles 650, 660 by the respective communication channels. Such instructions include instructions to traverse the grid 700 in various directions to various destinations, as well as instructions to engage and retrieve containers, and instructions to release and deposit/store containers. The communication channels 910, 920 are a wireless communication channel, such as a Wi-Fi communication channel or IEEE 802 type channel.

The controller 900 is configured to perform control processes that control the first container-handling vehicles 650 and the second container-handling vehicles 660 at groups of ports (e.g., the first group 710 and the second group 720) that extend in a line in the same direction (the positive/negative Y-direction 670, 672) as the container lifting parts 500 extend from the first container-handling robotic vehicles 650 and the second container-handling robotic vehicles 660. This control process is configured to minimise the impact of port obstruction, as described with reference to the examples of Figs. 8A and 8B, whilst maintaining a high-throughput at such groups of ports.

In the first group of ports 710, the first port 711 is assigned as a high-throughput port (likewise for the first port 721 of the second group of ports 720). A high-throughput port is beneficial in a 'goods-in' procedure, wherein items are loaded into the storage grid. At the high-throughput port, the container-handling robotic vehicle can arrive at the port and wait (while not performing a depositing or retrieving action) until a container is ready for retrieval from the port, by the container-handling robotic vehicle, for storage in the grid. As the container-handling robotic vehicle is permitted to wait at the high-throughput port, it can collect a container as soon as the container is ready.

However, if more ports in the first group of ports 710 are assigned as high-throughput ports, container-handling robotic vehicles waiting at the ports while not performing a depositing or retrieving action will obstruct other ports in the first group of ports 710 (as described with reference to Figs. 8A and 8B). To minimise such obstruction, container-handling robotic vehicles are controlled to be prevented from waiting at the other ports while not performing a depositing or retrieving action (i.e., waiting before or after performing a depositing or retrieving action).

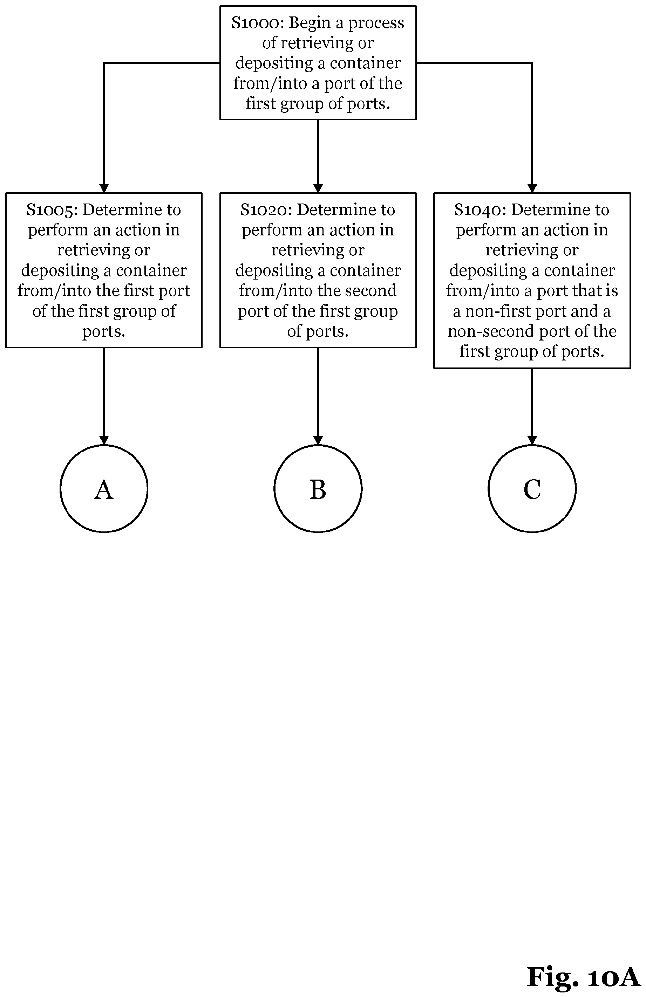

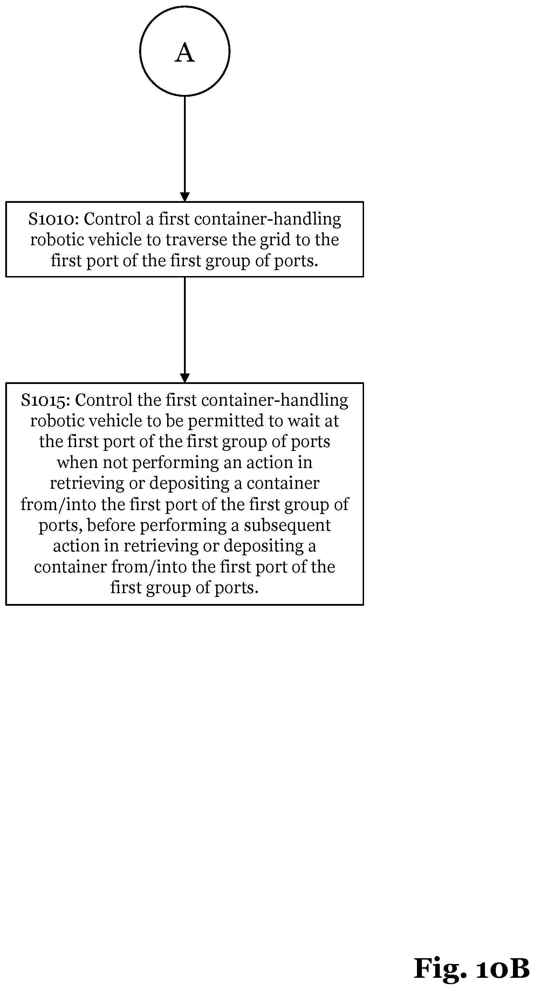

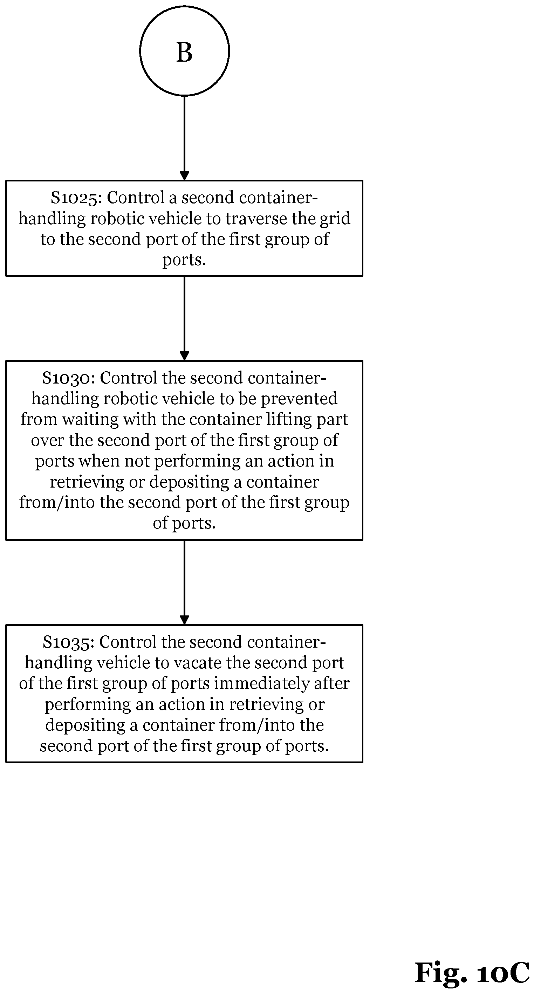

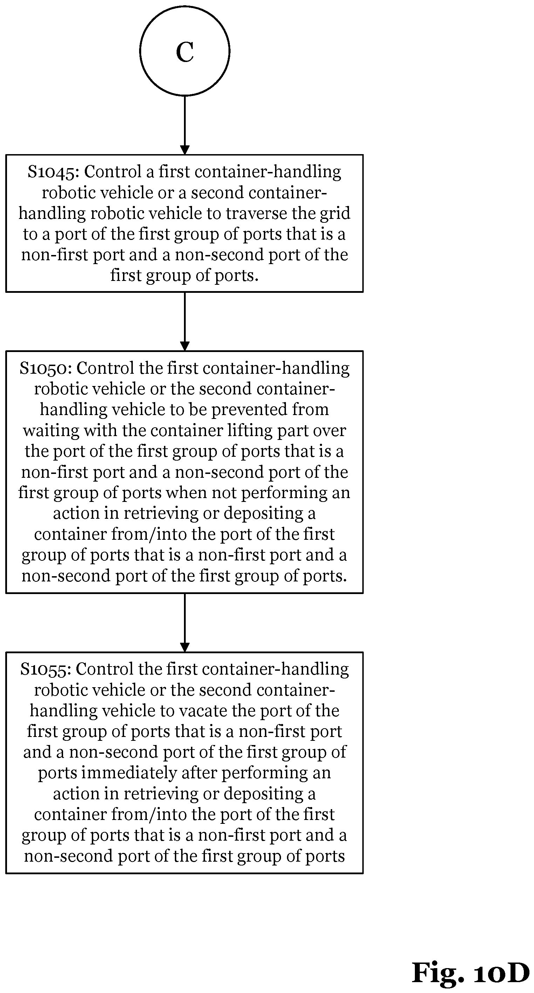

Fig. 10 is a flow chart of a process of controlling the container-handling robotic vehicles 650, 660 when retrieving or depositing containers at the first group of ports 710.

At step S1000 the process, performed by the controller 900, in retrieving or depositing a container from/into a port of the first group 710 of ports begins.

When the controller 900 determines that a container is to be retrieved or deposited from/into the first port 711 of the first group of ports 710, the process proceeds from step S1000 to step S1005.

The first port 711 of the first group of ports 710 is the end-most port in the line of ports in the negative Y-direction 672. That is, the first port 711 of the first group of ports 710 is the port for there is no port adjacent thereto in the negative Y-direction 672.

When the controller 900 determines that a container is to be retrieved or deposited from/into the second port 712 of the first group of ports 710, the process proceeds from step S1000 to step S1020.

The second port 712 of the first group of ports 710 is the port immediately adjacent to the first port 711 of the first group of ports 710 in the direction (positive Y-direction 670) toward the last port (e.g., fifth port 715) of the first group of ports 710.

When the controller 900 determines that a container is to be retrieved or deposited from/into a port that is a non-first port and a non-second port in the first group of ports 710, the process proceeds from step S1000 to step S1040.

The ports that are a non-first port and a non-second port are considered as the ports in the first group of ports that are not the first port 711 and not the second port 712. In the specific example of Fig. 7, these are the third port 713, the fourth port 714 and the fifth port 715.

At step S1005, the controller 90 determines to perform an action in retrieving or depositing a container from/into the first port 711 of the first group of ports 710.

The process then proceeds to step S1010.

At step S1010, the controller 900 controls a first container-handling robotic vehicle 650 to traverse the grid 700 to the first port 711 of the first group of ports 710.

When the first container-handling robotic vehicle 650 is at the first port 711 of the first group of ports 710, the first container-handling vehicle 650 is positioned with its body 300 over the cell immediately adjacent to the first port 711, in the negative Y-direction 672. The container lifting part 500 of the first container-handling robotic vehicle 650 is over the first port 711.

The process then proceeds to step S1015.

At step S1015, the controller 900 controls the first container-handling robotic vehicle 650 to be permitted to wait at the first port 711 of the first group of ports 710 when not performing an action in retrieving or depositing a container from/into the first port 711 of the first group of ports 710, before performing a subsequent action in retrieving or depositing a container from/into the first port 711 of the first group of ports 710.

In more detail, regarding the operating of the first port 711 of the first group of ports 710 that is the high-throughput port, the first container-handling vehicle 650 is allowed to wait with its body 300 over the cell immediately adjacent to the first port 711 in the negative Y-direction 672, and its container lifting part 500 over the first port 711. Because the body 300 is over the cell immediately adjacent to the first port 711 in the negative Y-direction 672, it is not blocking any other ports in the first group of ports 710. All of the other ports are in the positive Y-direction 670.

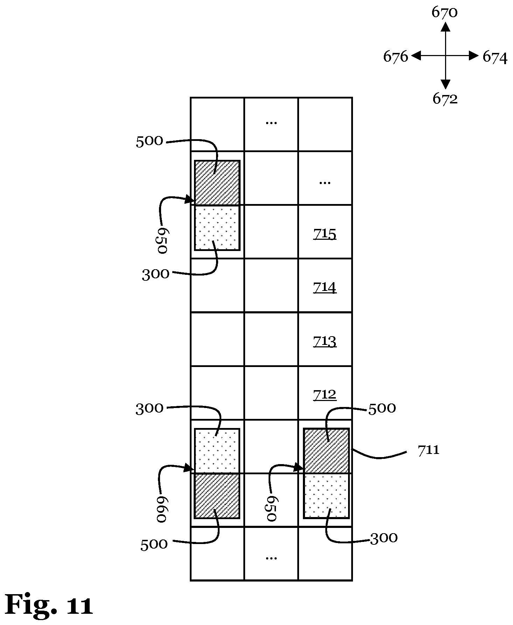

This is depicted in Fig. 11.

The first port 711 of the first group of ports 710 is considered as a high throughput port. This is because the first container-handling robotic vehicle 650 is allowed to wait with its container lifting part 500 over the first port 711. In this way, the first container-handling robotic vehicle 650 is ready at the first port 711, waiting to collect a container, as soon as an operator at the first port 711 is ready to send the container to the grid from the port. This is particularly useful during a goods-in process in which containers are being loaded into the storage grid 100 as the operator at the port does not need to wait for a container-handling robotic vehicle 650 to arrive at the port to collect the container.

This applies to each of the first container-handling robotic vehicles 650 operating in the automated storage and retrieval system.

The second container-handling robotic vehicles 660 are prevented from retrieving and depositing containers at the first port 711 of the first group of ports 710. That is, the controller 900 is prevented from controlling the second container-handling robotic vehicles 650 from retrieving and depositing containers at the first port 711 of the first group of ports 710. Should a second container-handling robotic vehicle 660 wait at the first port 711 of the first group of ports 710, it would have its body 300 over the second port 712 of the first group of ports 710 while its container lifting part 500 is over the first port 711 of the first group of ports 710. This would block the second port 712 thereby reducing port throughput.

Returning to step S1000, when the controller 900 determines that a container is to be retrieved or deposited from/into the second port 712 of the first group of ports 710, the process proceeds to step S1020.

At step S1020, the controller 900 determines to perform an action in retrieving or depositing a container from/into the second port 712 of the first group of ports 710.

The process then proceeds to step S1025.

At step S1025, the controller 900 controls a second container-handling robotic vehicle 660 to traverse the grid 700 to the second port 712 of the first group of ports 710.

The process then proceeds to step S1030.

At step S1030, the controller 900 controls the second container-handling robotic vehicle 660 to be prevented from waiting with the container lifting part 500 over the second port 712 of the first group of ports 710 when not performing an action in retrieving or depositing a container from/into the second port 712 of the first group of ports 710.

The process then proceeds to step S1035.

At step S1035, the controller 900 controls the second container-handling vehicle 660 to vacate the second port 712 of the first group of ports 710 immediately after performing an action in retrieving or depositing a container from/into the second port 712 of the first group of ports 710.

This applies to each of the second container-handling robotic vehicles 660 operating the automated storage and retrieval system.

When a second container-handling robotic vehicle 660 is at the second port 712 of the first group of ports 710, it has its body 300 over the third port 713 of the first group of ports 710, and its container lifting part 500 over the second port 712 of the first group of ports 710. When a second container-handling robotic vehicle 660 is performing an action at the second port 712, it is blocking the third port 713 of the first group of ports 710.

In other words, the second container-handling robotic vehicles 660 are prevented, by the controller 900, from waiting at the second port 712 of the first group of ports 710 when not performing an action in retrieving or depositing a container from/into the second port 712 of the first group of ports 710.

By controlling the second container-handling vehicle 660 to vacate the second port 712 of the first group of ports 710 immediately after performing an action in retrieving or depositing a container from/into the second port 712, the blocking of the third port 713 is minimised. Consequently, the negative impact on port throughput due to the blocking is minimised.

The first container-handling robotic vehicles 650 are prevented from retrieving/depositing containers from/into the second port 712 of the first group of ports 710. That is, the controller 900 is prevented from controlling the first container-handling robotic vehicles 650 from retrieving and depositing containers at the second port 712 of the first group of ports 710. Should a first container-handling robotic vehicle 650 retrieve/deposit a container from/into the second port 712, it would have its body 300 over the first port 711. This would block the high throughput first port 711 and could therefore negatively impact port throughput as another first container-handling robotic vehicle 650 would not be able to wait with its container lifting part 500 over the first port 711.

Returning to step S1000, when the controller 900 determines that a container is to be retrieved or deposited from/into a port that is a non-first port and a non-second port, the process proceeds from step S1000 to step S1040.

At step S1040, the controller 900 determines to perform an action in retrieving or depositing a container from/into a port that is a non-first port and a non-second port of the first group of ports 710.

Non-first and non-second ports of the first group of ports 710 can be considered as the ports that are not the first port 711 or the second port 712. In the example of Fig. 7, these are the third port 713, the fourth port 714 and the fifth port 715 of the first group of ports 710.

The process then proceeds to step S1045.

At step S1045, the controller 900 controls a first container-handling robotic vehicle 650 or a second container-handling robotic vehicle 660 to traverse the grid to a port of the first group of ports 710 that is a non-first port and a non-second port of the first group of ports 710.

The process then proceeds to step S1050.

At step S1050, the controller 900 controls the first container-handling robotic vehicle 650 or the second container-handling vehicle 660 to be prevented from waiting with the container lifting part 500 over the port of the first group of ports 710 that is a non-first port and a non-second port of the first group of ports 710 when not performing an action in retrieving or depositing a container from/into the port of the first group of ports 710 that is a non-first port and a non-second port of the first group of ports 710.

That is, both first container-handling robotic vehicles 650 and second container-handling robotic vehicles 660 are prevented from waiting with container lifting parts 500 over ports that are non-first ports and non-second ports of the first group of ports 710. The controller 900 is prevented from controlling both first container-handling robotic vehicles 650 and second container-handling robotic vehicles 660 from waiting with container lifting parts 500 over ports that are non-first ports and non-second ports of the first group of ports 710.

Should a first container-handling robotic vehicle 650 wait with its container lifting part 500 over a port in the first group of ports 710 that is a non-first and non-second port, its body 300 will block the immediately adjacent port in the negative Y-direction 672. Likewise, should a second container-handling robotic vehicle 660 wait with its container lifting part 500 over a port in the first group of ports 710 that is a non-first and non-second port, its body 300 will block the immediately adjacent port in the positive Y-direction 670.

The process then proceeds to step S1055.

At step S1055, the controller 900 controls the first container-handling robotic vehicle 650 or the second container-handling vehicle 660 to vacate the port of the first group of ports 710 that is a non-first port and a non-second port immediately after performing an action in retrieving or depositing a container from/into the port.

By controlling first container-handling robotic vehicles 650 and second container-handling vehicles 660 to immediately vacate the ports that are non-first ports and non second ports after performing an action at said ports, blocking of the immediately adjacent ports is minimised. Therefore, the negative impact on port throughput due to the blocking is minimised.

In summary, with regard to the first group of ports 710, the first container-handling robotic vehicles 650 are:
- Permitted to wait with the container lifting part over the first port 711 when not performing an action in retrieving or depositing a container from/into the first port 711, before performing a subsequent action in retrieving or depositing a container from/into the first port 711;
- Prevented from retrieving/depositing containers from/into the second port 712;
- Permitted to retrieve/deposit containers from/into non-second ports; and
- Prevented from waiting with the container lifting part over the non-first ports when not performing an action in retrieving or depositing a container from/into the non-first ports before performing a subsequent action in retrieving or depositing a container from/into the non-first ports.

With regard to the first group of ports 710, the second container-handling robotic vehicles 660 are:
- Permitted to retrieve/deposit containers from/into the non-first ports, including the second port 712;
- Prevented from retrieving/depositing containers from/into the first port 711;
- Prevented from waiting with the container lifting part 500 over any port when not performing an action in retrieving or depositing a container from/into the port before performing a subsequent action in retrieving or depositing a container from/into the port.

In this way, a group of ports (i.e., the first group 710) can be added to the grid 700 extending in a line in the same direction (the positive/negative Y-direction 670, 672) as the container lifting part 500 extends from the body 300 of the container-handling robotic vehicles 650, 660. This increases port throughput, compared to only have ports (i.e., the third group 630 and fourth group 640) that are arranged extending in a line in a perpendicular direction (the positive/negative X-direction 674, 676) to that which the container lifting part 500 extends from the body 300 of the container-handling robotic vehicles 650, 660.

Moreover, blocking of the ports in this first group 710 of ports is minimised by preventing the container-handling vehicles 650, 660 from waiting on the non-first ports. This further improves port throughput.

Furthermore, blocking of the first port 711 of the first group of ports by second container-handling vehicles 660 is avoided, thereby allowing operation of the first port 712 as the high-throughput port. Again, this improves port throughput.

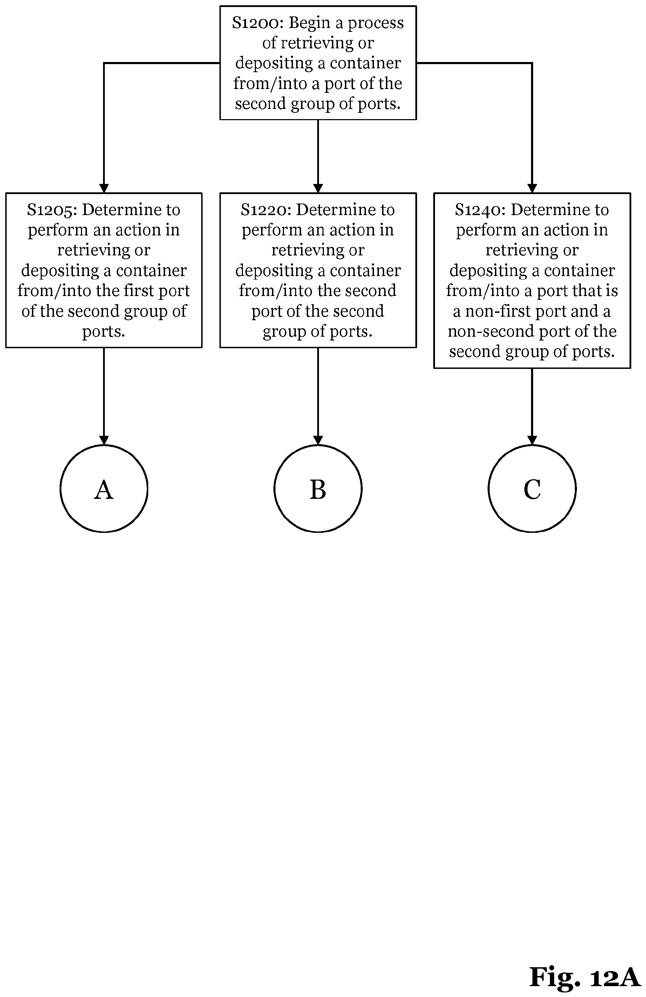

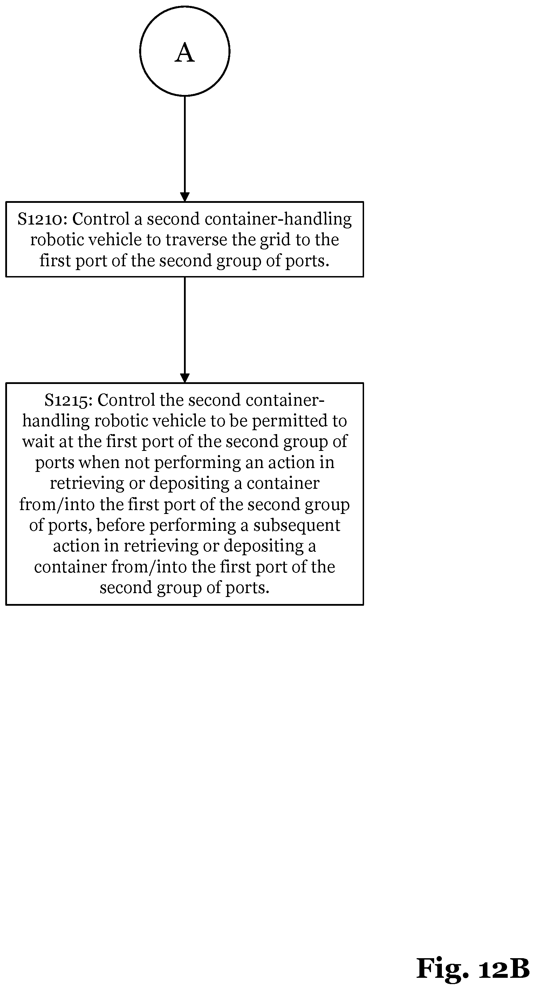

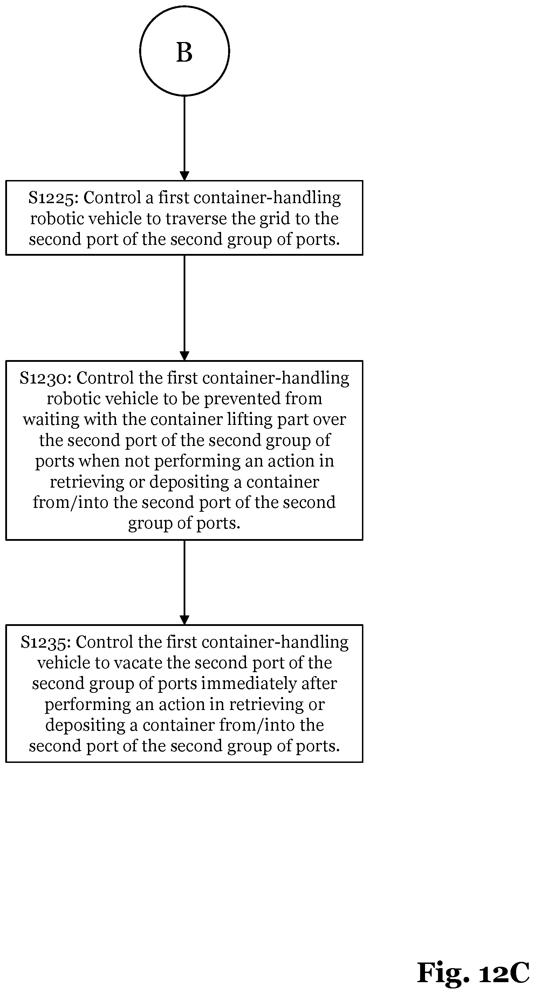

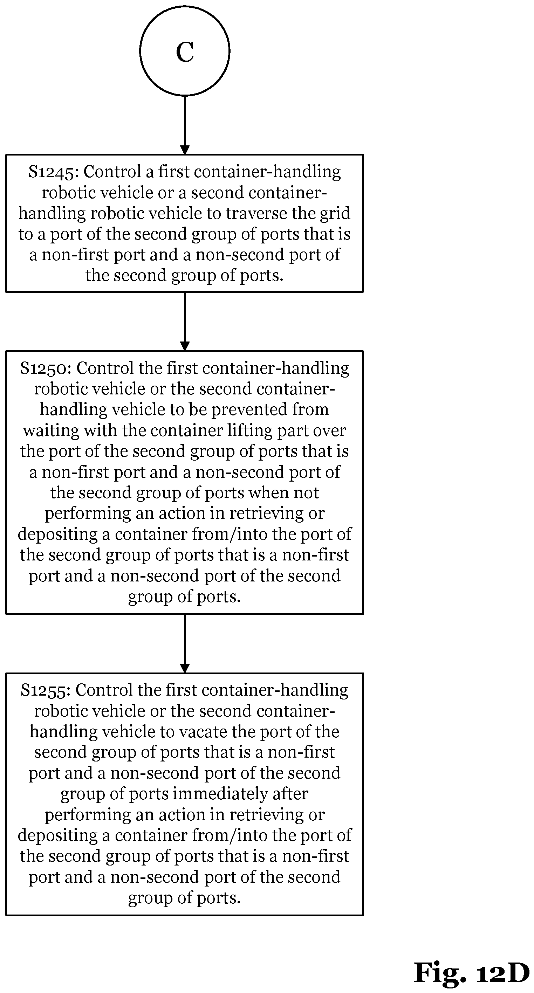

Fig. 12 is a flow chart of a process of controlling the container-handling robotic vehicles 650, 660 when retrieving or depositing containers at the second group of ports 720.

The teaching of the process of Fig. 12 corresponds directly to the process of Fig. 10, only for the second group of ports 720 rather than the first group of ports 710, and the first container-handling robotic vehicles 650 and the second container-handling robotic vehicles 660 switched.

At step S1000 the process, performed by the controller 900, in retrieving or depositing a container from/into a port of the second group of ports 720 begins.

When the controller 900 determines that a container is to be retrieved or deposited from/into the first port 721 of the second group of ports 720, the process proceeds from step S1200 to step S1205.

The first port 721 of the second group of ports 720 is the end-most port in the line of ports in the positive Y-direction 670. That is, the first port 721 of the second group of ports 720 is the port for there is no port adjacent thereto in the positive Y-direction 672.

When the controller 900 determines that a container is to be retrieved or deposited from/into the second port 722 of the second group of ports 720, the process proceeds from step S1200 to step S1220.

The second port 722 of the second group of ports 720 is the port immediately adjacent to the first port 721 of the second group of ports 720 in the direction (negative Y-direction 672) toward the last port (e.g., fifth port 725) of the second group of ports 720.

When the controller 900 determines that a container is to be retrieved or deposited from/into a port that is a non-first port and a non-second port in the second group of ports 720, the process proceeds from step S1200 to step S1240. The ports that are a non-first port and a non-second port are considered as the ports in the second group of ports 720 that are not the first port 721 and not the second port 722. In the specific example of Fig. 7, these are the third port 723, the fourth port 724 and the fifth port 725.

At step S1205, the controller 900 determines to perform an action in retrieving or depositing a container from/into the first port 721 of the second group of ports 720.

The process then proceeds to step S1210.

At step S1210, the controller 900 controls a second container-handling robotic vehicle 660 to traverse the grid 700 to the first port 721 of the second group of ports 720.

When the second container-handling robotic vehicle 660 is at the first port 721 of the second group of ports 720, the second container-handling vehicle 660 is positioned with its body 300 over the cell immediately adjacent to the first port 721, in the positive Y-direction 670. The container lifting part 500 of the second container-handling robotic vehicle 660 is over the first port 721.

The process the proceeds to step S1215.

At step S1215, the controller 900 controls the second container-handling robotic vehicle 660 to be permitted to wait at the first port 721 of the second group of ports 720 when not performing an action in retrieving or depositing a container from/into the first port 721 of the second group of ports 720, before performing a subsequent action in retrieving or depositing a container from/into the first port 722 of the second group of ports 720.

In more detail, regarding the operating of the first port 721 of the second group of ports 720 that is the high-throughput port, the second container-handling vehicle 660 is allowed to wait with its body 300 over the cell immediately adjacent to the first port 722 in the positive Y-direction 670, and its container lifting part 500 over the first port 721. Because the body 300 is over the cell immediately adjacent to the first port 721 in the positive Y-direction 670, it is not blocking any other ports in the second group of ports 720. All of the other ports are in the negative Y-direction 672.

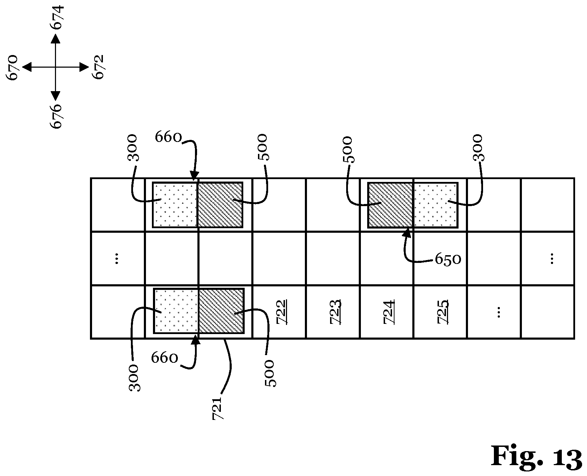

This is depicted in Fig. 13.

The first port 721 of the second group of ports 720 is considered as a high throughput port. This is because the second container-handling robotic vehicle 660 is allowed to wait with its container lifting part 500 over the first port 721. In this way, the second container-handling robotic vehicle 660 is ready at the first port 721, waiting to collect a container, as soon as an operator at the port is ready to send the container to the grid from the port 721. This is particularly useful during a goods-in process in which containers are being loaded into the storage grid 100 as the operator at the port does not need to wait for a container-handling robotic vehicle to arrive at the port to collect the container.

This applies to each of the second container-handling robotic vehicles 660 operating in the automated storage and retrieval system.

The first container-handling robotic vehicles 650 are prevented from retrieving and depositing containers at the first port 721 of the second group of ports 720. That is, the controller 900 is prevented from controlling the first container-handling robotic vehicles 650 from retrieving and depositing containers at the first port 721 of the second group of ports 720. Should a first container-handling robotic vehicle 650 wait at the first port 721 of the second group of ports 700, it would have its body 300 over the second port 722 of the second group of ports 720 while its container lifting part 500 is over the first port 721 of the second group of ports 720. This would block the second port 722 thereby reducing port throughput.

Returning to step S1200, when the controller 900 determines that a container is to be retrieved or deposited from/into the second port 722 of the second group of ports 720, the process proceeds to step S1220.

At step S1220, the controller 900 determines to perform an action in retrieving or depositing a container from/into the second port 722 of the second group of ports 720.

The process then proceeds to step S1225.

At step S1225, the controller 900 controls a first container-handling robotic vehicle 650 to traverse the grid 700 to the second port 722 of the second group of ports 720.

The process then proceeds to step S1230.

At step S1230, the controller 900 controls the first container-handling robotic vehicle 650 to be prevented from waiting with the container lifting part 500 over the second port 722 of the second group of ports 720 when not performing an action in retrieving or depositing a container from/into the second port 722 of the second group of ports 720.

The process then proceeds to step S1235.

At step S1235, the controller 900 controls the first container-handling vehicle 650 to vacate the second port 722 of the second group of ports 720 immediately after performing an action in retrieving or depositing a container from/into the second port 722 of the second group of ports 700.

This applies to each of the first container-handling robotic vehicles 650 operating the automated storage and retrieval system.

When a first container-handling robotic vehicle 650 is at the second port 722 of the second group of ports 720, it has its body 300 over the third port 723 of the second group of ports 720, and its container lifting part 500 over the second port 722 of the second group of ports 722. When a first container-handling robotic vehicle 650 is performing an action at the second port 722, it is blocking the third port 723.

In other words, the first container-handling robotic vehicles 650 are prevented, by the controller 900, from waiting at the second port 722 of the second group of ports 720 when not performing an action in retrieving or depositing a container from/into the second port 722 of the second group of ports 720.

By controlling the first container-handling vehicle 650 to vacate the second port 722 of the second group of ports 720 immediately after performing an action in retrieving or depositing a container from/into the second port 722, the blocking of the third port 723 is minimised. Consequently, the negative impact on port throughput due to the blocking is minimised.

The second container-handling robotic vehicles 660 are prevented from retrieving/depositing containers from/into the second port 722 of the second group of ports 720. That is, the controller 900 is prevented from controlling the second container-handling robotic vehicles 660 from retrieving and depositing containers at the second port 722 of the second group of ports 720. Should a second container-handling robotic vehicle 660 retrieve/deposit a container from/into the second port 722, it would have its body 300 over the first port 721 of the second group of ports 720. This would block the high throughput first port 721 and could therefore negatively impact port throughput as another second container-handling robotic vehicle 660 would not be able to wait with its container lifting part 500 over the first port 721 of the second group of ports 720.

Returning to step S1200, when the controller 900 determines that a container is to be retrieved or deposited from/into a port that is a non-first port and a non-second port, the process proceeds from step S1200 to step S1240.

At step S1240, the controller 900 determines to perform an action in retrieving or depositing a container from/into a port that is a non-first port and a non-second port of the second group of ports 720.

Non-first and non-second ports of the second group of ports 720 can be considered as the ports that are not the first port 721 or the second port 722. In the example of Fig. 7, these are the third port 723, the fourth port 724 and the fifth port 725 of the second group of ports 720.

The process then proceeds to step S1245.

At step S1245, the controller 900 controls a first container-handling robotic vehicle 650 or a second container-handling robotic vehicle 660 to traverse the grid 700 to a port of the second group of ports 720 that is a non-first port and a non-second port of the second group of ports 720.

The process then proceeds to step S1250.

At step S1250, the controller 900 controls the first container-handling robotic vehicle 650 or the second container-handling vehicle 660 to be prevented from waiting with the container lifting part 500 over the port of the second group of ports 720 that is a non-first port and a non-second port of the second group of ports 720 when not performing an action in retrieving or depositing a container from/into the port of the second group of ports 720 that is a non-first port and a non-second port of the second group of ports 720.

That is, both first container-handling robotic vehicles 650 and second container-handling robotic vehicles 660 are prevented from waiting with container lifting parts 500 over ports that are non-first ports and non-second ports of the second group of ports 720. The controller 900 is prevented from controlling both first container-handling robotic vehicles 650 and second container-handling robotic vehicles 660 from waiting with container lifting parts 500 over ports that are non-first ports and non-second ports of the second group of ports 720.

Should a first container-handling robotic vehicle 650 wait with its container lifting part 500 over a port in the second group of ports 720 that is a non-first and non-second port, its body 300 will block the immediately adjacent port in the negative Y-direction 672. Likewise, should a second container-handling robotic vehicle 660 wait with its container lifting part 500 over a port in the second group of ports 720 that is a non-first and non-second port, its body 300 will block the immediately adjacent port in the positive Y-direction 670.

The process then proceeds to step S1255.

At step S1255, the controller 900 controls the first container-handling robotic vehicle 650 or the second container-handling vehicle 660 to vacate the port of the second group of ports 720 that is a non-first port and a non-second port of the second group of ports 720 immediately after performing an action in retrieving or depositing a container from/into the port of the second group of ports 720 that is a non-first port and a non-second port of the second group of ports 720.

By controlling first container-handling robotic vehicles 650 and second container-handling vehicles 660 to immediately vacate the ports that are non-first ports and non second ports after performing an action at said ports, blocking of the immediately adjacent ports is minimised. Therefore, the negative impact on port throughput due to the blocking is minimised.

In summary, with regard to the second group of ports 720, the second container-handling robotic vehicles 660 are:
- Permitted to wait with the container lifting part 500 over the first port 721 when not performing an action in retrieving or depositing a container from/into the first port 721, before performing a subsequent action in retrieving or depositing a container from/into the first port 721;
- Prevented from retrieving/depositing containers from/into the second port 722;
- Permitted to retrieve/deposit containers from/into non-second ports; and
- Prevented from waiting with the container lifting part 500 over the non-first ports when not performing an action in retrieving or depositing a container from/into the non-first ports before performing a subsequent action in retrieving or depositing a container from/into the non-first ports.

With regard to the second group of ports 720, the first container-handling robotic vehicles 650 are:
- Permitted to retrieve/deposit containers from/into the non-first ports, including the second port 722;
- Prevented from retrieving/depositing containers from/into the first port 721;
- Prevented from waiting with the container lifting part 500 over any port when not performing an action in retrieving or depositing a container from/into the port before performing a subsequent action in retrieving or depositing a container from/into the port.

In this way, a group of ports (i.e., the second group 720) can be added to the grid 700 extending in a line in the same direction (positive/negative Y-direction 670, 672) as the container lifting part 500 extends from the body 300 of the container-handling robotic vehicles 650, 660. This increases port throughput, compared to only have ports (i.e., the third group 630 and fourth group 640) that are arranged extending in a line in a perpendicular direction (positive/negative X-direction 674, 676) to that which the container lifting part 500 extends from the body 300 of the container-handling robotic vehicles 650, 660.

Moreover, blocking of the ports in this second group of ports 720 is minimised by preventing the container-handling vehicles from waiting on the non-first ports. This further improves port throughput.

Furthermore, blocking of the first port 721 is avoided, thereby allowing operation of the first port 721 as the high-throughput port. Again, this improves port throughput.

Regarding the third group of ports 630, the controller 900 is configured to control only first container-handling robotic vehicles 650 to retrieve/deposit containers from/into ports of the third group of ports 630.

The second container-handling robotic vehicles 660 are not controlled to retrieve/deposit containers from/into ports of the third group of ports 630 because the container lifting part 500 extends from the body 300 of the second container-handling robotic vehicles 660 in a direction away from the ports of the third group of ports 630.

The controller 900 is configured to permit the first container-handling robotic vehicles 650 to wait with the container lifting part 500 over any one of the ports of the third group of ports 630 when not performing an action in retrieving or depositing a container from/into the port of the third group of ports 630 before performing a subsequent action in retrieving or depositing a container from/into the port of the third group of ports 630. This is because, when accessing a port of the third group of ports 630, the first container-handling robotic vehicles 650 do not block the adjacent ports of the third group 630. Through being permitted to wait, a container-handling robotic vehicle can be ready to collect a container as soon as the port operator sends the container. This improves port throughput.

Regarding the fourth group of ports 640, the controller 900 is configured to control only second container-handling robotic vehicles 660 to retrieve/deposit containers from/into ports of the fourth group of ports 640.

The first container-handling robotic vehicles 650 are not controlled to retrieve/deposit containers from/into ports of the fourth group of ports 640 because the container lifting part 500 extends from the body 300 of the first container-handling robotic vehicles 650 in a direction away from the ports of the fourth group of ports 640.

The controller 900 is configured to permit the second container-handling robotic vehicles 660 to wait with the container lifting part 500 over any one of the ports of the fourth group of ports 640 when not performing an action in retrieving or depositing a container from/into the port of the fourth group of ports 640 before performing a subsequent action in retrieving or depositing a container from/into the port of the fourth group of ports 640. This is because, when accessing a port of the fourth group of ports 640, the second container-handling robotic vehicles 660 do not block the adjacent ports of the fourth group 640. Through being permitted to wait, a container-handling robotic vehicle can be ready to collect a container as soon as the port operator sends the container. This improves port throughput.

While Fig. 7 shows two groups of ports (the first group 710 and the second group 720) that extend in a line in the same direction (the positive/negative Y-direction 670, 672) as the container lifting part 500 extends from the body 300 of the container-handling robotic vehicles 650, 660, it will be understood that this is for exemplary purposes and the teaching described herein can also be applied to examples with any integer number n of such groups of ports, wherein n is greater than or equal to one.

While Fig. 7 shows two groups of ports (the third group 630 and the fourth group 640) that extend in a line in a perpendicular direction (the positive/negative X-direction 674, 676) to the direction (the positive/negative Y-direction 670, 672) that the container lifting part 500 extends from the body 300 of the container-handling robotic vehicles 650, 660, it will be understood that this is for exemplary purposes and the teaching described herein can also be applied to examples with any integer number n of such groups of ports, wherein n is greater than or equal to one, or examples with zero groups of such ports.

While the present description refers to shorter edges 620 of the grid 700 that have ports that extend in a line in the same direction (the positive/negative Y-direction 670, 672) as that from which the containing lifting part 500 extends from the body 300 of the container-handling robotic vehicles 650, 660, and longer edges 610 of the grid 700 that have ports that extend in a line in a direction (the positive/negative X-direction 674, 676) that is perpendicular to the direction (the positive/negative Y-direction 670, 672) from which the containing lifting part 500 extends from the body 300 of the container-handling robotic vehicles 650, 660, it will be readily understood that the teaching with regard to control of the container-handling robotic vehicles 650, 660 can be applied when the longer edges 610 and the short edges 620 are switched.

That is, the present teaching is also applicable to examples in which the longer edges of the grid have ports that extend in a line in the same direction (the positive/negative Y-direction 670, 672) as that from which the containing lifting part 500 extends from the body 300 of the container-handling robotic vehicles 650, 660, and shorter edges of the grid have ports that extend in a line in a direction (the positive/negative X-direction 674, 676) that is perpendicular to the direction (the positive/negative Y-direction 670, 672) from which the containing lifting part 500 extends from the body 300 of the container-handling robotic vehicles 650, 660. Corresponding control of the container-handling robotic vehicles 650, 660 as described with reference to Figs. 10A-10D and 12A-12D is applicable to such examples, but for brevity the detail is not repeated here.

The present teaching can also be applied to examples in which the edges of the grid are the same length, wherein first edges of the grid have ports that extend in a line in the same direction (the positive/negative Y-direction 670, 672) as that from which the containing lifting part 500 extends from the body 300 of the container-handling robotic vehicles 650, 660, and second edges (perpendicular to the first edges) of the grid have ports that extend in a line in a direction (the positive/negative X-direction 674, 676) that is perpendicular to the direction (the positive/negative Y-direction 670, 672) from which the containing lifting part 500 extends from the body 300 of the container-handling robotic vehicles 650, 660. Corresponding control of the container-handling robotic vehicles as described with reference to Figs. 10A-10D and 12A-12D is applicable to such examples, but for brevity the detail is not repeated here.

More generally, the present teaching can be applied to examples with rectangular or non-rectangular grids (i.e., grids with more than four sides). In such embodiments, the grid has one or more first edges with ports that extend in a line in the same direction (the positive/negative Y-direction 670, 672) as that from which the containing lifting part 500 extends from the body 300 of the container-handling robotic vehicles 650, 660, and one or more second edges (perpendicular to the one or more first edges) with ports that extend in a line in a direction (the positive/negative X-direction 674, 676) that is perpendicular to the direction (the positive/negative Y-direction 670, 672) from which the containing lifting part 500 extends from the body 300 of the container-handling robotic vehicles 650, 660. Corresponding control of the container-handling robotic vehicles as described with reference to Figs. 10A-10D and 12A-12D is applicable to such examples, but for brevity the detail is not repeated here.

In an alternative and specific case, the first group of ports may have only two ports. In this specific case, the pair of ports comprises a first port and a second port, and the second port is in an adjacent grid cell to the first port in the positive Y-direction. The controller can be configured to control the one or more first container-handling robotic vehicles to retrieve/deposit containers from/into the first port. The controller can be configured to control the one or more first container-handling robotic vehicles to not retrieve/deposit containers from/into the second port. The controller can be configured to control the one or more second container-handling robotic vehicles to retrieve/deposit containers from/into the second port. The controller can be configured to control the one or more second container-handling robotic vehicles to not retrieve/deposit containers from/into the first port.

In this way, both the first port and the second port of the first group of ports can be operated as high throughput ports when the first groups of ports comprises only two ports.

Likewise, the second group of ports may have only two ports. In this specific case, the pair of ports comprises a first port and a second port, and the second port is in an adjacent grid cell to the first port in the negative Y-direction. The controller can be configured to control the one or more second container-handling robotic vehicles to retrieve/deposit containers from/into the first port. The controller can be configured to control the one or more second container-handling robotic vehicles to not retrieve/deposit containers from/into the second port. The controller can be configured to control the one or more first container-handling robotic vehicles to retrieve/deposit containers from/into the second port. The controller can be configured to control the one or more first container-handling robotic vehicles to not retrieve/deposit containers from/into the first port.

Again, in this way, both the first port and the second port of the second group of ports can be operated as high throughput ports when the second groups of ports comprises only two ports.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A controller configured to control container-handling robotic vehicle operation at ports in an automated storage and retrieval system, wherein the automated storage and retrieval system comprises:
a grid structure, comprising a plurality of grid cells across which a plurality of container-handling robotic vehicles traverse in an X-Y plane, wherein the container-handling robotic vehicles are configured to move forward and backward in an X-direction and a Y-direction in the X-Y plane;
the container-handling robotic vehicles each comprise a container lifting part and a main body part, wherein the container lifting part is configured to be positioned over a cell to retrieve or deposit a container from/into the cell, and when the container lifting part is arranged over a cell the main body part is positioned over an adjacent cell in the Y-direction such that the container-handling robotic vehicles each have a length of more than one grid cell in the Y-direction;
the plurality of container-handling robotic vehicles comprise one or more first container-handling robotic vehicles arranged with the container lifting part extending from the main body part in the positive Y-direction on the grid, and one or more second container-handling robotic vehicles arranged with the container lifting part extending from the main body part in the negative Y-direction on the grid, wherein the negative Y-direction is opposite to the positive Y-direction;
the automated storage and retrieval system further comprises:
a group of ports configured for the insertion and removal of containers into/from the grid structure, wherein the group of ports comprises a plurality of ports each occupying different respective grid cells that are adjacent to one another and are arranged in a line that extends in the positive Y-direction from a first port of the group of ports to a last port of the group of ports; and
wherein the controller is configured to:
permit the one or more first container-handling robotic vehicles to wait with the container lifting part over the first port of the group of ports when not performing an action in retrieving or depositing a container from/into the first port of the group of ports, before performing a subsequent action in retrieving or depositing a container from/into the first port of the group of ports; and
control the one or more first container-handling robotic vehicles and the one or more second container-handling robotic vehicles to be prevented from waiting with the container lifting part over non-first ports of the group of ports when not performing an action in retrieving or depositing a container from/into the non-first ports of the group of ports.

2. The controller of claim 1, wherein the controller is further configured to:
control the one or more second container-handling robotic vehicles to be permitted to retrieve/deposit containers from/into the non-first ports of the group of ports, and/or to be prevented from retrieving/depositing containers from/into the first port of the group of ports.

3. The controller of any preceding claim, wherein the controller is further configured to:
control the one or more first containing-handling robotic vehicles to be permitted to retrieve/deposit containers from/into non-second ports of the group of ports, and to be prevented from retrieving/depositing containers from/into the second port of the group of ports;
control the one or more second container-handling robotic vehicles to be permitted to retrieve/deposit containers from/into the second port of the group of ports;
wherein the second port of the group of ports is immediately adjacent to the first port of the group of ports in a direction toward the last port of the group of ports.

4. The controller of any preceding claim, wherein the group of ports is a first group of ports, and the automated storage and retrieval system further comprises:
a second group of ports, separate to the first group of ports, wherein the second group of ports comprises a plurality of ports each occupying different respective grid cells that are adjacent to one another and are arranged in a line that extends in the negative Y-direction from a first port of the second group of ports to a last port of the second group of ports;
wherein the controller is configured to:
permit the one or more second container-handling robotic vehicles to wait with the container lifting part over the first port of the second group of ports when not performing an action in retrieving or depositing a container from/into the first port of the second group of ports, before performing a subsequent action in retrieving or depositing a container from/into the first port of the second group of ports; and
control the one or more first container-handling robotic vehicles and the one or more second container-handling robotic vehicles to be prevented from waiting with the container lifting part over non-first ports of the second group of ports when not performing an action in retrieving or depositing a container from/into the non-first ports of the second group of ports.

5. The controller of claim 4, wherein the controller is further configured to:
control the one or more first container-handling robotic vehicles to be permitted to retrieve/deposit containers from/into the non-first ports of the second group of ports, and to be prevented from retrieving/depositing containers from/into the first port of the second group of ports; and/or
control the one or more second container-handling robotic vehicles to be permitted to retrieve/deposit containers from/into non-second ports of the second group of ports, and to be prevented from retrieving/depositing containers from/into the second port of the second group of ports, and control the one or more first container-handling robotic vehicles to be permitted to retrieve/deposit containers from/into the second port of the second group of ports.

6. The controller of claim 4 or claim 5, wherein the first group of ports are arranged at a first edge of the grid and the second group of ports are arranged at a second edge of the grid, wherein the second edge of the grid is an opposite edge to the first edge in the X-direction.

7. The controller of any preceding claim, wherein the automated storage and retrieval system further comprises a third group of ports, wherein the third group of ports comprises a single port, or a plurality of ports that are adjacent to one another and are arranged in a line that extends in the X-direction from a first port of the third group of ports to a last port of the third group of ports; and
wherein the controller is configured to:
control only the one or more first container-handling robotic vehicles to retrieve/deposit containers from/into ports of the third group of ports.

8. The controller of claim 7, wherein the third group of ports are arranged at a third edge of the grid, wherein the third edge of the grid is an edge in the positive Y-direction.

9. The controller of claim 7 or claim 8, wherein the controller is configured to permit the one or more first container-handling robotic vehicles to wait with the container lifting part over any one of the ports of the third group of ports when not performing an action in retrieving or depositing a container from/into the port of the third group of ports, before performing a subsequent action in retrieving or depositing a container from/into the port of the third group of ports.

10. The controller of any preceding claim, wherein the automated storage and retrieval system further comprises a fourth group of ports, wherein the fourth group of ports comprises a single port, or a plurality of ports that are adjacent to one another and are arranged in a line that extends in the X-direction from a first port of the fourth group of ports to a last port of the fourth group of ports; and
wherein the controller is configured to:
control only the one or more second container-handling robotic vehicles to retrieve/deposit containers from/into ports of the fourth group of ports

11. The controller of claim 10, wherein the fourth group of ports are arranged at a fourth edge of the grid, wherein the fourth edge of the grid is an edge in the negative Y-direction.

12. The controller of claim 10 or claim 11, wherein the controller is configured to permit the one or more second container-handling robotic vehicles to wait with the container lifting part over any one of the ports of the fourth group of ports when not performing an action in retrieving or depositing a container from/into the port of the fourth group of ports, before performing a subsequent action in retrieving or depositing a container from/into the port of the fourth group of ports.

13. An automated storage and retrieval system comprising the controller of any preceding claim.

14. A method of controlling container-handling robotic vehicle operation at ports in an automated storage and retrieval system, wherein the automated storage and retrieval system comprises:
a grid structure, comprising a plurality of grid cells across which a plurality of container-handling robotic vehicles traverse in an X-Y plane, wherein the container-handling robotic vehicles are configured to move forward and backward in an X-direction and a Y-direction in the X-Y plane;
the container-handling robotic vehicles each comprise a container lifting part and a main body part, wherein the container lifting part is configured to be positioned over a cell to retrieve/deposit a container from/into the cell, and when the container lifting part is arranged over a cell the main body part is positioned over an adjacent cell in the Y-direction such that the container-handling robotic vehicles each have a length of more than one grid cell in the Y-direction;
the plurality of container-handling robotic vehicles comprise one or more first container-handling robotic vehicles arranged with the container lifting part extending from the main body part in the positive Y-direction on the grid, and one or more second container-handling robotic vehicles arranged with the container lifting part extending from the main body part in the negative Y-direction on the grid, wherein the negative Y-direction is opposite to the positive Y-direction;
the automated storage and retrieval system further comprises:
a group of ports configured for the insertion and removal of containers from the grid structure, wherein the group of ports comprises a plurality of ports each occupying different respective grid cells that are adjacent to one another and are arranged in a line that extends in the positive Y-direction from a first port of the group of ports to a last port of the group of ports; and
wherein the method comprises:
permitting the one or more first container-handling robotic vehicles to wait with the container lifting part over the first port of the group of ports when not performing an action in retrieving or depositing a container from/into the first port of the group of ports, before performing a subsequent action in retrieving or depositing a container from/into the first port of the group of ports; and
controlling the one or more first container-handling robotic vehicles and the one or more second container-handling robotic vehicles to be prevented from waiting with the container lifting part over non-first ports of the group of ports when not performing an action in retrieving or depositing a container from/into the non-first ports of the group of ports.

15. A computer-readable medium storing instructions thereon that when executed by one or more processors of a controller in an automated storage and retrieval system cause the controller to control container-handling robotic vehicle operation at ports in an automated storage and retrieval system, wherein the automated storage and retrieval system comprises:
a grid structure, comprising a plurality of grid cells across which a plurality of container-handling robotic vehicles traverse in an X-Y plane, wherein the container-handling robotic vehicles are configured to move forward and backward in an X-direction and a Y-direction in the X-Y plane;
the container-handling robotic vehicles each comprise a container lifting part and a main body part, wherein the container lifting part is configured to be positioned over a cell to retrieve/deposit a container from/into the cell, and when the container lifting part is arranged over a cell the main body part is positioned over an adjacent cell in the Y-direction such that the container-handling robotic vehicles each have a length of more than one grid cell in the Y-direction;
the plurality of container-handling robotic vehicles comprise one or more first container-handling robotic vehicles arranged with the container lifting part extending from the main body part in the positive Y-direction on the grid, and one or more second container-handling robotic vehicles arranged with the container lifting part extending from the main body part in the negative Y-direction on the grid, wherein the negative Y-direction is opposite to the positive Y-direction;
the automated storage and retrieval system further comprises:
a group of ports configured for the insertion and removal of containers from the grid structure, wherein the group of ports comprises a plurality of ports each occupying different respective grid cells that are adjacent to one another and are arranged in a line that extends in the positive Y-direction from a first port of the group of ports to a last port of the group of ports; and
wherein the instructions cause the one or more processors to:
permit the one or more first container-handling robotic vehicles to wait with the container lifting part over the first port of the group of ports when not performing an action in retrieving or depositing a container from/into the first port of the group of ports, before performing a subsequent action in retrieving or depositing a container from/into the first port of the group of ports; and
control the one or more first container-handling robotic vehicles and the one or more second container-handling robotic vehicles to be prevented from waiting with the container lifting part over non-first ports of the group of ports when not performing an action in retrieving or depositing a container from/into the non-first ports of the group of ports.
